# EUROPEAN PATENT APPLICATION

(11) **EP 3 357 953 A1**
(43) Date of publication of application: **08.08.2018**
(21) Application number: 17154776.3
(22) Date of filing: 06.02.2017
(51) Int. Cl.: C08G 63/52, C08G 63/91, C09D 167/00, C09D 167/06, C09D 175/04, C09D 175/06, F03D 1/06

(54) **COMPOSITION AND METHOD FOR PREVENTION OF LEADING EDGE EROSION IN WIND TURBINES**

(71) Applicant: Nitto Denko Corporation, Ibaraki-shi, Osaka 567-8680 (JP)
(72) Inventor: The designation of the inventor has not yet been filed
(74) Representative: Hoffmann Eitle

(57) **Abstract**

The present invention thus provides formulations and precursor compositions that can be used for wind turbine leading edge protection. More particularly, two types of formulations and precursor compositions are disclosed:
Formulation type A: a formulation comprising a crosslinked polycondensate (A) and optionally one or more additive(s); wherein the polycondensate (A) contains repeating units derived from at least: a dicarboxylic acid (a); a diol (b); and an ethylenically unsaturated diacid (c); wherein the formulation is cured via ethylenically unsaturated diacid (c). The precursor composition to formulation of type A is a composition that can be cured to yield formulation type A.

Formulation type B: a crosslinked polycondensate (B) and optionally one or more additive(s); wherein the polycondensate (B) contains repeating units derived from at least: a dicarboxylic acid (a") and a diol (b"); wherein the formulation is cured via polycondensate (B) chemical end groups and a cross-linking agent. The precursor composition to formulation of type B is a composition that can be cured to yield formulation type B.

The present invention furthermore provides films and sheets, which contain or consist of formulations of type A or B. The present invention also provides various uses of the formulations of the present invention on wind turbine blade leading edges as described hereinbelow.

## Description

### 1. Technical Field of the Invention

This application relates to layer and coatings for prevention of erosion and more particularly formulations prevention of leading edge erosion in wind turbines and their precured compositions, manufacture and uses.

### 2. State of the art

US 5,486,096 discloses a coating for protection of airfoil surfaces from erosion caused by the impingement of particles in the incoming air stream of a gas turbine engine or on helicopter blades. The coating consists of an epoxy film toughened with hard particles (such as SiO₂ or Al₂O₃) to improve the erosion resistance and softer particles which impede the progression of cracks through the coating. A method for applying the coating is also described.

US 2014/0050581 describes an erosion protection system and method applicable to foils or aerodynamic surfaces. Erosion protective elements having joggles are provided, each single element being alignable with the next to provide a contiguous erosion protection.

US 5,562,420 discloses airfoils for the blade of a wind turbine wherein each airfoil is characterized by a thickness in a range from 16% - 24% and a maximum lift coefficient designed to be largely insensitive to roughness effects. The airfoils include a family of airfoils for a blade 15 to 25 meters in length, a family of airfoils for a blade 1 to 5 meters in length, and a family of airfoils for a blade 5 to 10 meters in length.

EP 3 037 655 A1 describes a rotor blade extension realized for mounting over a tip of a wind turbine rotor blade, comprising an airfoil extension portion realized to extend the length of the rotor blade.

US 2013/0294923 provides a wind turbine rotor blade capable of protecting a base material in the blade tip portion of the wind turbine blade from liquid droplet erosion due to raindrops to improve durability of the wind turbine rotor blade, thereby lengthening the interval of maintenance of the wind turbine rotor blade. It is provided with a base material provided with an outer skin material formed of fiber-reinforced plastic, a protective coating having wear resistance that is applied over the entire surface of the base material, and a protective tape having wear resistance that is affixed to the leading edge portion of the protective coating in the blade tip portion.

US 8,770,942 describes a scratch-resistant blade such as a fiber-reinforced plastic wind turbine blade and a blade protective sheet which can be easily repaired when scratched. A blade is provided with a laminated protective sheet bonded to at least part of a leading edge of an fiber-reinforced plastic blade body of said blade, wherein the laminated protective sheet comprises an adhesive layer (thickness 0.5 to 1.0 mm), an intermediate fabric layer (thickness ∼ 0.3 mm) and a durable surface layer, in that order from the blade body. The protective sheet is said to be superior in shock resistance, tracking resistance and ozone resistance and easy to bond. It is affixed to at least the leading edge of a fiber-reinforced plastic blade body in advance to yield a blade which is allegedly scratch-resistant and maintenance-free for a long period of time.

WO 2016/075619 describes a polyurethane material prepared from a polyol, butanediol, and an isocyanate. The protective cover is adapted to be attached along at least a part of a longitudinal edge of the wind turbine blade by adhesion of an inside of the protective cover to a surface of the longitudinal edge of the wind turbine blade.

US 6,341,747 discloses a nanocomposite layer applied to the leading edge of an airfoil. The nanocomposite is an elastomeric matrix reinforced with nanosized particles ranging in size from about 0.5 to 1000 nanometers and preferably ranging in size from about 5 to 100 nanometers. These nanosized reinforcing particles improve the mechanical properties of a pure elastomer and assist the nanocomposite layer in absorbing and dissipating the energy caused by impact energy over a larger volume in comparison to a pure elastomeric material. The nanocomposite layer is, therefore, capable of withstanding the repeated impact caused by the particulate matter for a greater length of time compared to a pure elastomer. Applying a nanocomposite layer over an aerodynamic member also increases the airfoil's wear resistance. The nanosized particles claims includes aluminum oxide, silicon, silicon oxide, silicon carbide, silicon aluminum oxy nitride, silicon nitride, boron, iron, nickel, carbon.

EP 2 497 943 relates to an arrangement to improve the surface of a wind turbine blade. According to the arrangement invented a plastic tape is arranged at specific locations of the blade to reinforce the blade-surface there. The plastic tape shows a sandwich structure with at least two layers. The first layer comprises a carbon fiber used for reinforcement purposes of the tape. The second layer comprises a pure thermoplastic fluoropolymer.

US 2008/0107540 describes a damping element for a wind turbine rotor blade. The damping element comprises a laminate material made of at least one viscoelastic layer and at least one stiff layer adhered to said viscoelastic layer, wherein the damping element is adapted to be attached to a body of the rotor blade so that the at least one viscoelastic layer is in contact with the body of the rotor blade.

US 2011/0142678 describes a rotor blade assembly for a wind turbine. The rotor blade includes an erosion protection coating configured on a surface of the rotor blade. The erosion protection coating includes a ceramic layer, the ceramic layer having a thickness of less than approximately 10 millimeters. The ceramic layer is configured to reduce erosion of the rotor blade. The ceramic film can be applied to the surface of the rotor blade through one of chemical deposition, atomic layer deposition, laser deposition, or plasma deposition. In another embodiment, the ceramic film is applied by spraying the surface of the rotor blade with one of a ceramic powder or a ceramic liquid suspension and curing the one of the ceramic powder or the ceramic liquid suspension. The erosion protection coating further comprises an elastic layer (such as polyurethane) disposed between the ceramic layer and the surface of the rotor blade, the elastic layer being configured to reduce strain transmission between the rotor blade and the ceramic layer.

US 2013/0045105 relates to a wind turbine blade including a protective layer having an inner side and outer side, the inner side is sized and oriented to locate within the recess to facilitate withstanding impact forces applied by an object. Said protective layer comprises a first protective layer and a second protective layer. The first protective layer is composed on an elastic material (acrylic foam) that facilitates absorbing forces induced by said object. The second protective layer comprises at least one of nylon, hydrocarbon polymer, synthetic resinous material, polyethylene and polypropylene.

US 2013/0177433 discloses multi-material for retrofitting wind turbine rotor blades that include a shell having a leading edge opposite a trailing edge and a structural support member that supports the shell and is disposed internally inside the wind turbine rotor blade between the leading edge and the trailing edge and extends for at least a portion of a rotor blade span length, wherein the structural support member includes an original structural support portion including a first material and a retrofitted structural support portion extending from the original structural support portion at a joint and including a second material.

US 2015/0132140 discloses an erosion shield for a wind turbine blade having a plurality of layers. The layers have an adhesive bond strength between adjacent layers less than the cohesive tensile strength of the layers, such that the outer layers of erosion resistant material are arranged to peel away or delaminate from the erosion shield under the action of the wind once the particular layer is ruptured or eroded. This dynamic removal of the outer layers of the erosion shield provides for increased shield lifetime, and a reduction in the maintenance operations required for a wind turbine blade having such an erosion shield. One layer of bridging material is approximately 0.05 - 0.25 mm deep, preferably 0.1 mm deep and the layers of erosion resistant material are approximately 0.1 - 0.5 mm deep, preferably 0.3 mm deep.

US 2016/0215757 describes an erosion resistant aerodynamic fairing for a rotor blade. The fairing body is formed from at least one reinforcing fibre layer set in a cured resin. The erosion resistant pre-form is fixed to an outer surface of the fairing body. The erosion resistant pre-form comprises a thermoplastic film outer layer fused to a fibre substrate. The fibre substrate of the erosion resistant pre-form is impregnated with the cured resin of the fairing body which fixes at the preform to the fairing body. More particularly the thermoplastic film comprises an aliphatic polyurethane and has a textured outer surface comprising a plurality of square and/or pyramid shaped protrusions preferably arranged in a regular array.

US 8,690,539 describes surface coating for wind turbine that is composed of at least in part with a refractory layer, preferably a boron-based refractory layer. The claimed boron-based refractory layer has a layer thickness between 10 nm and 10 µm effective to provide a degree of erosion resistance or lubrication to the surface. The boron-based refractory layer further includes boride and steel, a surface of the steel being coated at least in part with the refractory layer.

WO 2008/157013 discloses a method for protecting an airfoil leading edge surface from sand and water erosion comprising the steps of: a) applying to said leading edge surface a preformed molded covering having a complementary shape to said leading edge surface; b) bonding said preformed molded covering to said leading edge surface; and c) applying a sand erosion resistant topcoat

### 3. Problem solved by the invention

Having regard to the state of the art summarized above, there remains a need for more efficient compositions and methods for preventing highly effective leading edge erosion in wind turbines. Such compositions should be easy and cost effective in terms of manufacturing and application. It is also desirably that they are versatile in terms of practical applications, including the suitability for manufacturing new equipment and suitability for repairing existing eroded equipment.

This problem is solved by the present invention. Furthermore, unlike most of the protective compositions reported so far, the invention described herein can be performed with building blocks that are derivable from natural and renewable resources. Therefore the carbon footprint and production costs compared to the prior art are lower.

### 4. Summary of the Invention

The above objectives are accomplished by the formulations and methods of the present invention. The present invention thus provides formulations and precursor compositions that can be used for wind turbine leading edge protection. More particularly, two types of formulations and precursor compositions are disclosed:
- Formulation type A: a formulation comprising a crosslinked polycondensate (A) and optionally one or more additive(s); wherein the polycondensate (A) contains repeating units derived from at least: a dicarboxylic acid (a); a diol (b); and an ethylenically unsaturated diacid (c); wherein the formulation is cured via ethylenically unsaturated diacid (c).
- The precursor composition to formulation of type A is a composition that can be cured to yield formulation type A.
- Formulation type B: a crosslinked polycondensate (B) and optionally one or more additive(s); wherein the polycondensate (B) contains repeating units derived from at least: a dicarboxylic acid (a) and a diol (b); wherein the formulation is cured via polycondensate (B) chemical end groups and a cross-linking agent.
- The precursor composition to formulation of type B is a composition that can be cured to yield formulation type B.

More specifically, the present invention pertains to the following embodiments: It pertains to polycondensate compositions as described hereinbelow and as specified in appended claim 1. Preferred embodiments thereof are described in dependent claims 2 to 5. The invention further pertains to methods for making such polycondensate compositions as described hereinbelow and as specified in appended claims 6 to 8.

The present invention further pertains to formulations obtainable by curing the compositions of the invention. Such formulations are described hereinbelow and are specified in appended claim 9. The invention further pertains to methods for making such formulations, as described hereinbelow and as specified in appended claim 10.

The present invention furthermore provides films and sheets, which contain or consist of formulations of type A or B, as described hereinbelow and as specified in appended claims 11 to 13. It also pertains to layered structures as described hereinbelow and as specified in appended claim 14.

Finally, the present invention provides various uses of the formulations of the present invention on wind turbine blade leading edges as described hereinbelow. In particular, it pertains to the use of the film or sheet according to appended claim 13 for preventing or reducing leading edge erosion in wind turbines and to the use of a tackifier-containing formulation of the invention according to appended claim 11 for repairing blades of wind turbines having defects resulting from leading edge erosion.

### 5. Detailed Description of the Invention

### 5.1 Definitions

The term ***"bio-based"*** is meant to refer to substances derived from renewable starting materials (as opposed to mineral oil-derived starting materials) by isolation and optionally one or more chemical and/or purification transformations.

Unless specified otherwise, references to the ***"molecular weight"*** of a polymeric substance are to be understood as references to the weight average molecular weight, which is determined by GPC using a Shimadzu Prominence GPC system equipped with a differential refractive index detector and calibrated with polystyrene standards.

The term *"**α transition**"* refers to the value determined by rheology. Rheological measurements were performed on a Discovery HR-2 hybrid rheometer (TA Instruments) in oscillation mode using parallel plate geometry. The α transition was measured by monitoring tan δ by scanning the temperature from -100°C to 150°C (ramp of 5 K/min) while imposing a constant strain of 0.4% and at a frequency of 1 Hz (linear regime conditions).

The *"**acid value**"* is defined as the mass of potassium hydroxide (in mg) required to neutralize 1 g of polycondensate, and is measured by direct titration using a standard ethanolic potassium hydroxide solution.

The ***"hydroxyl value"*** is defined as the mass of potassium hydroxide (in mg) equivalent to the hydroxyl content of 1 g of polycondensate. It is measured by acetylation of the polycondensate followed by hydrolysation of the excess of acetic anhydride. The acetic acid formed is subsequently titrated with an ethanolic potassium hydroxide solution.

The term *"**fatty acid**"* is meant to refer to carboxylic acids having a long aliphatic chain, which may be saturated or may contain one or more unsaturations. The aliphatic chain may range from 4 to 30 carbon atoms, preferably from 6 to 28 carbon atoms, more preferably from 8 to 25 carbon atoms and even more preferably from 10 to 22 carbon atoms.

The term *"**fatty alcohol**"* is meant to refer to an aliphatic alcohol having a long aliphatic chain, which may be saturated or may contain one or more unsaturations. The aliphatic chain may range from 4 to 30 carbon atoms, preferably from 6 to 28 carbon atoms, more preferably from 8 to 25 carbon atoms and even more preferably from 10 to 22 carbon atoms.

The term **"curing reaction"** is used herein to characterize the condensation-type cross-linking reaction described in Section 6.2 and 6.3 below. The terms "cured" and "cross-linked" and "curing" and "cross-linking", respectively, are used as synonyms in the context of the present application.

Unless specified otherwise or the context dictates otherwise, references to **"dicarboxylic acid", "diacid"** or "**dimer fatty acid**" in the present application are intended to refer to the respective dicarboxylic acid, **"diacid"** or **"dimer fatty acid"** and the corresponding mono- or di- C₁₋₈-alkyl esters and preferably the mono- or di-C₁₋₄- alkyl esters.

**Viscosity** indications refer to viscosities determined by rheological analysis which are measured on a Discovery HR-2 hybrid rheometer (TA Instrument). Unless specified otherwise, viscosity indications refer to flow measurements made at 25°C by scanning different shear rates.

Indications of **peel forces** refer to values determined by measuring on stainless steel at 180° angle at 23°C ±1°C and 50% ±5% RH, on a sample of 25 mm width and a length at least 6 cm, which is obtained by application of the sample onto the stainless steel surface, followed by pressing with a 2 kg roller twice, followed by equilibration during a dwell time of 30 min (at 23°C ±1°C 50% ±5% RH), followed by peeling the sample from the stainless steel surface, wherein the speed of peeling is 300 mm/min. Any further experimental details are in accordance with ASTM D3330 / D3330M-02.

Unless specified otherwise, amount ***indications in %*** are to be understood as indications in weight %. Indications in wt.% *"relative to"* another compound or relative to the weight of another compound are meant to characterize the (weight of the compound of interest) divided by the (weight of the specified another compound) multiplied with 100%

As used herein, the terms ***"comprises",*** "***comprising***"*,* "***includes***"*, **"including", "has",*** "***having***" or any other variation thereof, are intended to cover a non-exclusive inclusion. For example, an adhesive system that comprises a list of components is not necessarily limited to only those components but may include other components that are not expressly listed or inherent to such a composition. That said, the terms "comprises", "comprising", "includes", "including", "has", "having" or any other variation thereof also cover the disclosed embodiment having no further additional components (*i.e.* consisting of those components). By way of example, a system comprising a polycondensate and a plasticizer layer discloses the system with just these components as well as a system comprising these components along with other unmentioned components (*e.g*. a filler a stabilizer and/or a tackifierr).

Also, the indefinite articles "***a***" and "***an***" preceding an element or component of the invention are intended to be non-restrictive regarding the number of instances (*i.e.* occurrences) of the element or component. Therefore "a" or "an" should be read to include one or at least one, and the singular word form of the element or component also includes the plural unless the number is obviously meant to be singular. By way of example, reference to a damping layer comprising a polymer should be understood to mean that the damping layer comprises one or at least one type of that polymer unless specified otherwise.

Unless stated otherwise and/or the technical context dictates otherwise, indications provided below in a general manner apply equally for polycondensates of type A and of type B as well as formulations of type A and of type B. In case of any contradictions or inconsistencies, the indication provided specifically for the respective type A or type B prevails over a general indication.

In the context of the present application, the reference to a feature being a ***"preferred"*** feature is meant to indicate that it is preferred to combine this feature with other preferred features of the present application. All such combinations of preferred features with other preferred features are meant to be directly and unambiguously disclosed.

If, in the context of the present application, a compound is characterized by means of two or more variable groups, each variable group may be selected independently irrespective whether the meanings of the variable groups are provided in the same or in different lists.

In the context of the present application, the term *"**ethylenically unsaturated**"* is intended to encompass compounds or moieties containing one or more carbon-carbon double bonds. The double bond may be conjugated with other unsaturated groups, but aromatic groups are not meant to be encompassed.

As used herein, the term *"**low weight material**"* characterizes a material that has a density of less than 1.5 g/cm³, preferably less than 1.0 g/cm³.

In the context of the present application, multiple limitations are to be considered in a cumulative manner. For instance, the relative amount indications for the different components of the present formulations are to be understood as being further limited by the inherent limitation that the sum of all relative amounts must be 100 wt.%.

### 5.2 Polycondensate (A)

### 5.2.1 Raw materials

The **polycondensate (A)** as reported herein is obtained by reaction of raw materials comprising at least one dicarboxylic acid (a), at least one diol (b), and at least one ethylenically unsaturated diacid (c). One or more optional components (d) can also be included.

### 5.2.1.1 Dicarboxylic acid (a)

In principle, any dicarboxylic acid can be used as component (a), which is capable of undergoing polycondensation reaction with diol components, provided that the ethylenically unsaturated dicarboxylic acids specified as component (c) below are excluded. The dicarboxylic acids suitable for use in the present invention are preferably characterized by the following general formula (I):

R^{a}OOC-R¹-R²-R³-COOR^{b} (I)

wherein R¹ is absent or selected from C₁₋₁₅ alkylene, and C₂₋₁₅ alkynylene; R² is selected from C₁₋₁₂ alkylene, and C₂₋₁₂ alkynylene, each of which may contain one or two 5-7-membered rings, which may optionally be condensed; R³ is absent or selected from C₁₋₁₅ alkylene, and C₂₋₁₅ alkynylene. Each of these groups may be unsubstituted or substituted by 1-3 substituents, wherein said substituents neither contain hydroxyl nor carboxyl or carboxylic acid ester groups and are preferably selected from C₁₋₈ alkyl, C₂₋₈ alkynyl, C₁₋₆ alkoxy. Each of R^{a} and R^{b} is independently selected from hydrogen, alkyl groups having 1 to 8 carbon atoms, preferably 1 to 4 carbon atoms. One or more dicarboxylic acids (a) may be used either singly or in combination.

In a preferred embodiment, R¹ is absent; R² is selected from C₂₋₁₀ alkylene being unsubstituted or substituted by 1-3 substituents, wherein said substituents are selected from C₁₋₆ alkyl; R³ is absent. Each of R^{a} and R^{b} is independently selected from hydrogen and alkyl groups having 1 to 4 carbon atoms.

In another preferred embodiment dicarboxylic acid (a) is a dimer of a fatty acid (hereinafter sometimes referred to as dicarboxylic acid (a')), wherein dimerization may for instance involve a 4+2 cycloaddition to yield a 6-membered cycle. Suitable dimers are described for instance in Gubbles et al. Macromolecules (2013), 46, 3975-3984 and Vendamme et al. Macromolecules (2013), 46, 3395-3405.

Fatty acids suitable for dimerization may be selected from mono- and polyunsaturated fatty acids such as oleic acid, linoleic acid, stearidonic acid, eicosatrienoic acid, eicosatetraenoic acid, eicosapentaenoic acid, clupanodonic acid, docosahexaenoic acid, tetracosapentaenoic acid, nisinic acid, mead acid, arachidonic acid, adrenic acid or calendic acid, and/or mixtures thereof as well as palmitoleic acid, eleostearic acid, ricinoleic acid, vernolic acid, licanic acid, myristoleic acid, margaroleic acid, gadoleic acid, eicosadienoic acid and/or erucic acid or mono- or dialkyl esters and mixtures thereof. In a further preferred embodiment, the fatty acid is selected from the group consisting of a linoleic, linolenic, stearidonic, eicosadienoic, eicosatrienoic, eicosatetraenoic, eicosapentaenoic, clupanodonic, docosahexaenoic, tetracosapentaenoic, nisinic, mead, arachidonic, adrenic or calendic acid or mono- or dialkyl esters and mixtures thereof. The dimer is fully hydrogenated after dimerization.

Dimers of fatty acid are commercially available. For example, dimers of oleic acid or linoleic acid are available from Croda (The Netherlands) under the trade name PRIPOL 1009 or Pripol 1006, or Oleon (Belgium) under the trade names Radiacid 0976 or Radiacid 0975. These compounds have high purity, are fully hydrogenated, and are distilled aliphatic dimer acids. These products appear as colorless to lightly colored, clear viscous liquids. Preferred properties can be summarized as follows:

| | |
|---|---|
| Purity: | ≥95% |
| Acid value: | 194-201 mg KOH/g |

One or more dicarboxylic acid (a) may be used either singly or in combination.

### 5.2.1.2 Diol (b)

In principle, any diol can be used as component (b), which is capable of undergoing polycondensation reaction with dicarboxylic acid components. Diol (b) is preferably selected from the compounds characterized by the following general formula (II):

HO-R⁴-R⁵-R⁶-OH (II)

wherein R⁴ is absent or selected from C₁₋₁₅ alkylene, C₂₋₁₅ alkenylene, and C₂₋₁₅ alkynylene; R⁵ is selected from C₁₋₁₂ alkylene, C₂₋₁₂ alkenylene, and C₂₋₁₂ alkynylene, each of which may contain one or two 5-7-membered rings, which may optionally be condensed; R⁶ is absent or selected from C₁₋₁₅ alkylene, C₂₋₁₅ alkenylene, and C₂₋₁₅ alkynylene. Each of these groups may be unsubstituted or substituted by 1-3 substituents, wherein said substituents neither contain hydroxyl or carboxyl or carboxylic acid ester groups and are preferably selected from C₁₋₆ alkyl, C₂₋₆ alkenyl, C₂₋₆ alkynyl, C₁₋₆ alkoxy. One or more diols (b) may be used either singly or in combination.

In a preferred embodiment, R⁴ is absent; R⁵ is selected from C₂₋₁₀ alkylene, and C₃₋₁₀ alkenylene, preferably C₄₋₁₀ alkenylene, each of which may be unsubstituted or substituted by 1-3 substituents, wherein said substituents are preferably selected from C₁₋₆ alkyl; R⁶ is absent.

In another preferred embodiment, diol (b) is a dimer of a fatty alcohol (hereinafter sometimes referred to as diol (b')), wherein dimerization may for instance involve a 4+2 cycloaddition to yield a 6-membered cycle. Another preferred diol (b) is 1,4-butanediol. A combination of both fatty alcohol dimer and 1,4-butanediol is also preferred.

Dimers of fatty alcohols (b') are commercially available, for example, from Croda (The Netherlands) under the trade name PRIPOL 2033. This compound has high purity, is fully hydrogenated, and is a distilled aliphatic dimer alcohol. This product appears as colorless to lightly colored, clear viscous liquid. Preferred properties of this compound can be summarized as follows:

| | |
|---|---|
| Dimer %: | ≥95% |
| Hydroxyl value: | 202-212mg KOH/g |
| Acid value: | ≤0.2mg KOH/g |

A partially hydrogenated dimer of fatty alcohol can be obtained for instance from Nanjing Hongbaoli Co., Ltd (China).

In another preferred embodiment in combination with any of the above or below embodiments, the dimer of fatty alcohol used for the polycondensation is fully hydrogenated.

One or more diol (b) may be used either singly or in combination.

### 5.2.1.3 Ethylenically unsaturated diacid (c)

In principle, any ethylenically unsaturated dicarboxylic acid can be used as component (c), which is capable of undergoing polycondensation reaction with diol components. Ethylenically unsaturated diacid (c) is preferably selected from the compounds characterized by the following general formula (III):

R^{c}OOC-R⁷-COOR^{d} (III)

wherein R⁷ is selected from C₁₋₁₀ alkylene, C₂₋₁₀ alkenylene, and C₃₋₁₀ alkynylene. Each of these groups may be unsubstituted or substituted by 1-3 substituents, wherein said substituents are preferably selected from C₁₋₈ alkyl, C₁₋₈ alkenyl, C₂₋₈ alkynyl, C₁₋₆ alkoxy, and -R⁸-COOR⁹, wherein R⁷ and/or at least one of its substituents is selected such that one or more carbon-carbon double bonds is/are present in the part of the molecule formed by R⁷ and its substituents, wherein such carbon-carbon double bond(s) may also be formed between a carbon atom of R⁷ and the carbon atom of the substituent, which is covalently bonded to said carbon atom of R⁷. R⁸ is C₁₋₃ alkylene, C₂₋₃ alkenylene or C₂₋₃ alkynylene and R⁹ is C₁₋₆ alkyl. Each of R^{c} and R^{d} is independently selected from hydrogen and alkyl groups having 1 to 8 carbon atoms, preferably 1 to 4 carbon atoms. The one or more carbon-carbon double bonds may each independently have cis or trans (Z or E) stereochemistry.

In a preferred embodiment, R⁷ is selected from C₂₋₄ alkylene, C₂₋₄ alkenylene, and C₂₋₄ alkynylene. Each of these groups may be unsubstituted or substituted by 1-3 substituents, wherein said substituents are preferably selected from C₁₋₃ alkyl, C₁₋₃ alkenyl, C₂₋₃ alkynyl, C₁₋₄ alkoxy, and -R⁸-COOR⁹, provided that R⁷ and/or at least one of its substituents is selected such that one or more carbon-carbon double bonds is/are present in the part of the molecule formed by R⁷ and its substituents, wherein said carbon-carbon double bond may also be formed between a carbon atom of R⁷ and the carbon atom of the substituent, which is covalently bonded to said carbon atom of R⁷. R⁸ is C₁₋₃ alkylene, C₁₋₃ alkenylene or C₂₋₃ alkynylene and R⁹ is C₁₋₄ alkyl. Each of R^{c} and R^{d} is independently selected from hydrogen and alkyl groups having 1 to 8 carbon atoms and preferably 1 to 4 carbon atoms.

The ethylenically unsaturated dicarboxylic acid can also be a compound of formula (I) specified above, but wherein one or more of the groups R¹, R² and/or R³ represents a C₂₋₁₅ alkenylene group, and wherein the remaining groups are selected from the meanings listed above in connection with formula (I). This can also be a dimer of a fatty acid, of the type described as diacid (a') above, but containing one or more ethylenically unsaturated carbon-carbon double bonds. Such non-hydrogenated or partially hydrogenated dimers of fatty acids can be obtained for instance from Arizona Chemicals (The Netherlands), under the trade mark UNIDYME.

According to another preferred embodiment, the ethylenically unsaturated dicarboxylic acid (c) is represented by general formula (IIIa):

R^{c}OOC-R¹⁰-R¹¹-R¹²-COOR^{d} (IIIa)

wherein R^{c} and R^{d} are defined as above for formula (III) and wherein R¹⁰, R¹¹ and R¹² are each independently selected from the group consisting of a covalent bond, -(CR^{e}R^{f})ₘ-,-C(R^{e})=C(R^{f})- and -C(=CR^{e}R^{f})-, wherein R^{e} and R^{f} are each independently selected from C₁₋₄ alkyl, C₂₋₄ alkenyl, C₂₋₄ alkynyl, C₁₋₄ alkoxy, and -R¹³-COOR¹⁴, m represents a number of from 1 to 3, R¹³ represents C₁₋₃ alkylene, C₂₋₃ alkenylene or C₂₋₃ alkynylene and R¹⁴ represents C₁₋₄ alkyl, with the proviso that at least one of R¹⁰, R¹¹ and R¹² represents a group selected from-C(R^{e})=C(R^{f})- and -C(=CR^{e}R^{f})-. The meanings of R^{c} and R^{d} are as specified above. That is, each of R^{c} and R^{d} is independently selected from hydrogen and alkyl groups having 1 to 8 carbon atoms, preferably 1 to 4 carbon atoms.

Particularly preferred compounds (c) are selected from the group consisting of fumaric acid, maleic acid, itaconic acid, citraconic acid mesaconic acid and aconitic acid, and/or their respective C₁₋₄ dialkyl esters.

One or more ethylenically unsaturated diacid (c) may be used either singly or in combination.

### 5.2.1.4 Optional further components (d)

The polycondensate (A) may comprise repeating units derived from one or more further components comprising two or more functional groups that are reactive under the polycondensation reaction conditions specified below, provided such optional additional components do not prevent accomplishing the beneficial effects of the present invention.

Further optional components may for instance be compounds containing one or more hydroxyl groups and one or more carboxyl groups. Bifunctional compounds of this type such as lactic acid could serve to replace simultaneously dicarboxylic acid compounds (a) and diol compounds (b). Compounds having more than two functional groups could have the same effect of replacing both components (a) and (b) and, additionally, they could also be used to introduce branching into the polycondensate. Typical compounds of this type are citric acid and citric acid ester.

Branching may also be introduced using optional components (d) that have three or more functional groups of the same type. Typical representatives of this class of optional components (d) are glycerol and pentaerythritol.

Another group of optional further components is the group of polyalkylene glycols including especially polyethylene glycol (PEG), poly(tetramethylene ether)glycol (PTMEG), and polypropylene glycol (PPG). The polyalkylene glycol for use as optional further component (d) in the present invention has a weight average molecular weight of 2000 g/mol or less. It is preferably characterized by the following general formula (IV):

H-(O-R¹⁵)ₙ₁-OH (IV)

wherein R¹⁵ represents an alkylene group having from 2 to 4 carbon atoms, including especially ethylene groups (-CH₂-CH₂-), propylene groups (-CH₂-CH₂-CH₂-), methyl-substituted ethylene (-CH(Me)-CH₂-, wherein Me represents a methyl group), tetramethylene (-CH₂-CH₂-CH₂-CH₂-), methyl-substituted propylene (-CH(Me)-CH₂-CH₂- or -CH₂-CH(Me)-CH₂-), dimethyl-substituted ethylene (-CH(Me)-CH(Me)- or -C(Me)₂-CH₂-) or mixtures thereof, with ethylene groups being preferred (polyethylene glycol, PEG); and wherein n1 is an average value and it is >1. If repeating units having side-chains, such as methyl-substituted ethylene, are present, two or more of these may have regular or irregular (random) orientation. Preferably, n1 is in the range of from 2 to 35, more preferably from 3 to 27, even more preferably from 4 to 23 and most preferably from 4 to 15. For the preferred embodiment of PEG, this means that the preferred weight-average molecular weight of component (d) is from 100 to 1500 g/mol, more preferably 150 to 1200 g/mol, even more 180 to 1000 g/mol and most preferably from 190 to 650 g/mol. Particularly preferred is the use of any one of the commercially available products PEG 200, PEG 400, PEG 600, PEG 800, PEG 1000 and PEG 1500 and any mixtures thereof. It is also possible to use different grades of the product, including industrial grade products and highly pure analytical grade products.

When using polyalkylene oxides other than PEG, the average number of repeating units should be the same. Hence, the molecular weight ranges and preferred molecular weight ranges given for PEG may be adapted accordingly, taking the differences in molecular weight of each repeating unit into account.

Yet further optional components may be higher aggregates, such as trimers or oligomers, that may be formed in the course of the above-mentioned dimerization reactions yielding dimers of fatty acids and dimers of fatty alcohols.

For the avoidance of doubt, if a component could possibly be understood to fall within the scope of two or more of the above categories (a), (b), (c) and (d), for the purpose of defining the present invention, it shall belong solely to the category mentioned earlier in the above list. For instance, some ethylenically unsaturated compounds with more than two carboxylic acid or ester groups are covered already by the definition of the above component (c). These compounds must therefore not be regarded as components (d) but only as components (c).

In a preferred embodiment in combination with any of the above or below embodiments, the optional further component (d) is present in a concentration of 1 mol% to 60 mol% and preferably below 25 mol% relative to the total weight of the feed composition for making the polycondensate. If optional component (d) is a diol, the relative amount of diol (b) is reduced by a corresponding amount. If optional component (d) is a diacid, the relative amount of diacid (a) is reduced by a corresponding amount. If the optional component (d) has both hydroxyl groups and carboxyl groups, the relative amount of both diacid (a) and diol (b) are reduced such that the reduction of the molar amount of carboxyl groups and hydroxyl groups in the two components, respectively, corresponds to the molar amount of carboxyl groups and hydroxyl groups introduced by the optional component (d).

In a preferred embodiment in combination with any of the above or below embodiments, the optional further component (d) is a diol selected from PEG and PTMEG and accounts for 10 mol% to 90 mol%, more preferably 15 mol% to 45 mol%, of the total diol monomers in the feed composition for making the polycondensate.

### 5.2.1.5 Compositional ratios of polycondensate (A)

In a preferred embodiment in combination with any of the above or below embodiments, the molar ratio of the molar amount of hydroxyl groups derived from component diol (or combination of diols) (b) and optionally component (d) to the molar amount of carboxyl groups (including carboxyl ester groups) derived from the dicarboxylic acid (or combination of dicarboxylic acids) components (a), (c) and optionally (d) is from 2:1 to 1:2, more preferably from 1.3:1 to 1:1.3.

Yet, in another preferred embodiment the molar amount of hydroxyl groups derived from component diol (or combination of diols) (b) and optionally component (d) to the molar amount of carboxyl groups (including carboxyl ester groups) derived from the dicarboxylic acid (or combination of dicarboxylic acids) components (a), (c) and optionally (d) such that the molar ratio of diols to carboxyl groups is either in the range of from 0.83 to 0.97 or in the range of from 1.03 to 1.17. An excess of diol component or dicarboxylic acid (or dicarboxylic ester) component results in polycondensate having a lower molecular weight and high relative amounts of terminal hydroxyl or carboxylic acid functional groups, respectively.

The molar ratio of component dicarboxylic acid (ester) (a) to ethylenically unsaturated diacid (ester) (c) determines the degree of cross-linking. The lower the ratio, the higher the degree of cross-linking. The ration is typically in the range of from 1:9 to 9:1.

In a preferred embodiment in combination with any of the above or below embodiments, the molar ratio of component dicarboxylic acid (a) to ethylenically unsaturated diacid (c) is from99 to 0.33, more preferably from19 to 1.0 ., and even more preferably from 9 to 1.5.

### 5.2.2 Polycondensation to yield polycondensate (A)

The polycondensation can be carried out in any manner known in the state of the art. It is preferred to carry out the polycondensation without solvent, *i.e.* as a bulk condensation with stirring. The stirring speed is preferably in the range of from 120 to 250 rpm, more preferably 150 to 220 rpm. The reaction mixture is preferably heated to a temperature of 160 to 210°C, more preferably 170°C to 200°C. Due to the volatile nature of compound (c), the polycondensation is preferably carried out in two parts, the first part being carried out at normal pressure under a nitrogen stream for 3 to 30 hours, preferably 7 to 20 hours, and then, in the second part, vacuum is applied. It is particularly preferred to carry out the second part of the polycondensation in two stages, wherein the first stage involves a polycondensation at a lower vacuum of about 7-13 mbar and a temperature of about 140 to 180°C, and wherein the second stage involves polycondensation at a higher vacuum of about 2-8 mbar and a temperature of about 180-210°C. It is further preferred that the first stage has a duration of 1-3 hours and the second stage has a duration of 2-5 hours. The experimental details given in this section have been optimized for laboratory scale processes. If the process is to be carried out at a larger (e.g. industrial) scale, its process parameters need to be adjusted in an appropriate manner. Up-scaling of chemical processes can be done by a chemical engineer relying on common general knowledge and routine optimization.

In a preferred embodiment in combination with any of the above or below embodiments the polycondensation is performed in the presence of a catalyst. Catalysts that may be used for the polycondensation process are well known in the art.

In another preferred embodiment in combination with any of the above or below embodiments, the catalyst is selected from the group consisting of salts and oxides of Li, Ca, Mg, Mn, Zn, Pb, Sb, Sn, Ge, and Ti, and their glycol adducts, more preferably acetate salts of Li, Ca, Mg, Mn, Zn, Pb, Sb, Sn, Ge, and Ti, and Ti alkoxides, even more preferably titanium(IV) *n*-butoxide, tin(II) octoate, butyl tin chloride dihydroxide, manganese acetate, or zinc acetate, in particular titanium(IV) *n*-butoxide.

In a preferred embodiment in combination with any of the above or below embodiments, the polymerization catalyst is used in a concentration of 0.001 to 2 wt%, more preferably 0.005 to 0.5 wt%, in particular about 0.02 wt% with respect to the total weight of monomers (a) to (d) in the feed composition. It is preferred to employ the lowest possible amount of catalyst that yields a satisfactory yield at an acceptable reaction time. Using more catalyst than necessary will lead to darker polycondensates. The minimum required amount of catalyst can be determined by systematic routine optimization procedures.

In a more preferred embodiment the polymerization is performed in presence of titanium(IV) *n*-butoxide as catalyst. More preferably, the catalyst, such as titanium(IV) *n-*butoxide, is present at concentration comprised between 0.001 wt% to 1 wt% with respect to the weight of diacid.

In a preferred embodiment in combination with any of the above or below embodiments, the catalyst is added at the beginning of the reaction. In another preferred embodiment in combination with any of the above or below embodiments, the catalyst is added in portions one or more times to the reaction mixture during the reaction period.

In a preferred embodiment the polymerization is performed in presence of a catalyst that does not induce darkening or coloring of the polycondensate.

In a preferred embodiment in combination with any of the above or below embodiments, the polycondensation reaction is conducted in the presence of a radical inhibitor to prevent reaction of the ethylenic unsaturations during the polyester formation. Inhibitors that may be used for this purpose are well known in the art.

In another preferred embodiment in combination with any of the above or below embodiments, the inhibitor is selected from the group consisting of hydroquinone, 4-methoxyphenol (also known as monomethyl ether hydroquinone or MEHQ), 2-methylhydroquinone, benzoquinone or 2-methylbenzoquinone.

In a preferred embodiment in combination with any of the above or below embodiments, the inhibitor is added simultaneously with the ethylenically unsaturated diacid (c).

In a preferred embodiment in combination with any of the above or below embodiments, the radical inhibitor is used in a concentration of 5 to 800 ppm, more preferably 50 to 300 ppm with respect to the total weight of monomer(s) (c) in the feed composition.

### 5.2.3 Molecular weight and molecular weight distribution of polycondensate (A)

The polycondensate (A) is typically characterized by weight average molecular weight (M_{w}) ranging from 20,000 to 150,000 g/mol, preferably 35,000 to 95,000 g/mol, more preferably from 45,000 to 70,000 g/mol. It is furthermore preferable that the polycondensate (A) exhibits a molecular weight distribution Mw/Mn of from 1.00 to 3.5, preferably from 1.5 to 2.8.

If the desired molecular weight cannot be reached by direct polycondensation, the molecular weight of the polymer can be increased *via* chain extension reaction. For example, suitable compounds for the chain extension for OH terminated polycondensate are difunctional isocyanate compounds such as hexamethylene 1,6-diisocyanate, tolulene diisocyanate, m-phenylene diisocyanate, p-phenylene diisocyanate, xylylene diisocyanate, 4,4'-diphenyl methane diisocyanate, 2,4'-diphenyl methane diisocyanate, 2,2'-diphenyl methane diisocyanate, hexamethylene diisocyanate, isophorone diisocyanate, polymethylenepolyphenyl diisocyanate, 3,3'-dimethyl-4,4'-biphenylene diisocyanate, 3,3'-dimethyl-4,4'-diphenylmethane diisocyanate, 3,3-dichloro-4,4'-biphenylene diisocyanate or 1,5-naphthalene diisocyanate. For carboxyl-terminated polycondensates, carbodiimides are suitable for use as chain extenders. An example of a commercial source of difunctional carbodiimide is that available from BASF (Germany) under the trade name Lupranate.

In a preferred embodiment in combination with any of the above or below embodiments, the chain extension reaction is performed in presence of heat and/or a catalyst. Catalysts that may be used for the chain extension process are well known in the art. It is performed prior to the addition of any further components of composition B as described below.

The preferred concentration range for chain extension agents is from 3 to 12 mol% and more preferably 3 to 9 mol% (with respect to polycondensate molar amount). Chain extension using chain extension agents can be performed by mixing the polycondensate and chain extension agent optionally in presence of a catalyst and/or in the optional presence of heat. Catalysts suitable for use in this reaction are well-known to the person skilled in the art. They include especially zirconium (IV) acetylacetonate, which is preferably used at a concentration from 0.001 to 2 wt% and most preferably 0.01 to 0.1 wt% (with respect to polycondensate weight).

### 5.2.4 Further properties of polycondensate (A)

The polycondensate (A) is preferably characterized by one or more of the following further properties:
- α, transition temperature below 0°C, preferably from -80°C to -20°C.

For polycondensates obtainable from a monomer composition having a molar ratio of hydroxyl groups to carboxyl groups in the range of from 1.03 to 1.17 (*i.e.* hydroxyl terminated polycondensates):
- acid value (expressed in mg KOH/g polymer) from 0.1 to 150, preferably from 0.1 to 20, even more preferably from 0.1 to 1.
- hydroxyl value (expressed in mg KOH/g polymer) from 1 to 150, preferably from 1 to 50, even more preferably from 15 to 25.

For polycondensates obtainable from a monomer composition having a molar ratio of hydroxyl groups to carboxyl groups in the range of from 0.83 to 0.97 (*i.e.* carboxylic acid terminated polycondensate):
- acid value (expressed in mg KOH/g polymer) from 1 to 150, preferably from 1 to 80, even more preferably from 5 to 40.
- hydroxyl value (expressed in mg KOH/g polymer) from 0.1 to 150, preferably from 0.1 to 50, even more preferably from 0.1 to 15.

The above ranges apply for polycondensates which have no optional component (d). Acid values and hydroxyl values may change if optional component (d) is used. The extent of change depends on the type of optional component (d), relative amount thereof and possibly other factors, so that no precise ranges can be given.

### 5.3 Polycondensate (B)

### 5.3.1 Raw materials

The **polycondensate (B)** as described herein is obtained by reaction of raw materials comprising at least one dicarboxylic acid (a"), at least one diol (b"), and optionally one or more components (d").

Suitable dicarboxylic acid (a"), diol (b"), and optional components (d") are the same than described above for polycondensate (A) as dicarboxylic acid (a), diol (b), and optional components (d), respectively. However, contrary to the polycondensate (A) described above, it is further possible for polycondensate (B) to use an ethylenically unsaturated diacid (a"), which is of the formula (I) as described above for the dicarboxylic acid component (a), but wherein one or more of the groups R¹, R² and/or R³ represents a C₂₋₁₅ alkenylene group, and wherein the remaining groups are selected from the meanings listed above in connection with formula (I). This can also be a dimer of a fatty acid, as described above, but containing one or more ethylenically unsaturated carbon-carbon double bonds. Such (partially hydrogenated) dimers of fatty acids can be obtained for instance from Arizona Chemicals (The Netherlands), under the trade mark UNIDYME.

### 5.3.2 Polymerization of polycondensate (B)

In a preferred embodiment in combination with any of the above or below embodiments, the molar ratio of component diol (b") (or combination of diols) to component diacid (or combination of diacids) (a") is from 2:1 to 1:2, more preferably from 1.3:1 to 1:1.3). An excess of diol component or diacid component results in polycondensate having a lower molecular weight and high hydroxyl or carboxylic acid functional groups respectively.

The polycondensation can be carried out in any manner known in the state of the art. It is preferred to carry out the polycondensation without solvent, *i.e.* as a bulk condensation with stirring. The stirring speed is preferably in the range of from 120 to 250 rpm, more preferably 150 to 220 rpm. The reaction mixture is preferably heated to a temperature of 160 to 250°C, more preferably 170°C to 230°C. The application of a vacuum in the range of 2 to 60 mbar and preferably 4 to 12 mbar is advantageous. If volatile compounds are used as monomers, the polycondensation is first carried out at normal pressure under a nitrogen stream for 3 to 30 hours, preferably 7 to 20 hours, and then vacuum as specified above is applied. If no volatile monomer compounds are used, said vacuum may be applied from the beginning of the reaction. If no volatile monomer compounds are used, it is particularly preferred to carry out polycondensation in two stages, wherein the first stage involves a polycondensation at a lower vacuum of about 7-13 mbar and a temperature of about 170 to 190°C, and wherein the second stage involves polycondensation at a higher vacuum of about 2-8 mbar and a temperature of about 215-235°C. It is further preferred that the first stage has a duration of 1-3 hours and the second stage has a duration of 2-5 hours.

In a preferred embodiment in combination with any of the above or below embodiments the polycondensation is performed in presence of a catalyst.

A catalyst can be employed for the polycondensation reaction. This catalyst may encompass, but is not limited to: di-ⁿbutyltin (IV) oxide, dioctyltin (IV) dilaurate, titanium (IV) acetyl acetonate, titanium (IV) tetraisopropoxide, titanium(IV) ⁿbutoxide, titanium(IV) ^{t}butoxide, aluminum (III) acetylacetonate, aluminum (III) isopropoxide, iron (III) acetylacetonate, zirconium (IV) acetylacetonate, zirconium (IV) propoxide, tetrakis (acetylacetonato) hafnium (IV), zinc(II) acetylacetonate, molybdenum (IV) oxide bis(acetylacetonate), lantan (III) isopropoxide, vanadium (IV) oxide acetylacetonate.

In a preferred embodiment in combination with any of the above or below embodiments, the polymerization catalyst is used in a concentration of 0.001 to 2 parts by weight, more preferably 0.005 to 0.5 parts by weight, in particular about 0.02 parts by weight with respect to the total weight of monomers in the feed composition being 100 parts by weight. It is preferred to employ the lowest possible amount of catalyst that yields a satisfactory yield at an acceptable reaction time. Using more catalyst than necessary will lead to darker polycondensates. The minimum required amount of catalyst can be determined by systematic routine optimization procedures.

In a more preferred embodiment the polymerization is performed in the presence of Titanium(IV) butoxide as catalyst. More preferably, the catalyst, such as titanium(IV) butoxide, is present at concentration comprised between 0.001 wt% to 1 wt% with respect to the weight of diacid. It is preferred to employ the lowest possible amount of catalyst that yields a satisfactory yield at an acceptable reaction time. Using more catalyst than necessary will lead to darker polycondensates. The minimum required amount of catalyst can be determined by systematic routine optimization procedures.

In a preferred embodiment in combination with any of the above or below embodiments, the catalyst is added at the beginning of the reaction. In another preferred embodiment in combination with any of the above or below embodiments, the catalyst is added in portions one or more times to the reaction mixture during the reaction period.

In a preferred embodiment the polymerization is performed in presence of a catalyst that does not induce darkening or coloring of the polycondensate.

### 5.3.3 Molecular weight and molecular weight distribution of polycondensate (B)

The polycondensate (B) is typically characterized by a weight average molecular weight (M_{w}) ranging from 18,000 to 150,000 g/mol, preferably from 20,000 to 85,000 g/mol, more preferably from 27,000 to 70,000 g/mol and even more preferably from 30,000 to 65,000 g/mol. It is furthermore preferable that the polycondensate (B) exhibits a molecular weight distribution Mw/Mn of from 1.00 to 3.5, preferably from 1.4 to 2.5 and even more preferably from 1.5 to 2.0.

If the desired molecular weight cannot be reached by direct polycondensation, the molecular weight of the polymer can be increased *via* chain extension reaction. For the example, suitable compounds for the chain extension for OH terminated polycondensate are difunctional isocyanate compounds such as hexamethylene 1,6-diisocyanate, tolulene diisocyanate, m-phenylene diisocyanate, p-phenylene diisocyanate, xylylene diisocyanate, 4,4'-diphenyl methane diisocyanate, 2,4'-diphenyl methane diisocyanate, 2,2'-diphenyl methane diisocyanate, hexamethylene diisocyanate, isophorone diisocyanate, polymethylenepolyphenyl diisocyanate, 3,3'-dimethyl-4,4'-biphenylene diisocyanate, 3,3'-dimethyl-4,4'-diphenylmethane diisocyanate, 3,3-dichloro-4,4'-biphenylene diisocyanate or 1,5-naphthalene diisocyanate. For carboxyl-terminated polycondensates, carbodiimides are suitable for use as chain extenders. An example of a commercial source of difunctional carbodiimide is that available from BASF (Germany) under the trade name Lupranate.

In a preferred embodiment in combination with any of the above or below embodiments, the chain extension reaction is performed in presence of heat and/or a catalyst. Catalysts that may be used for the chain extension process are well known in the art. It is performed prior to the addition of any further components of composition B as described below.

### 5.3.4 Further properties of polycondensate (B)

The polycondensate (B) is preferably characterized by one or more of the following further properties:
- α transition temperature below 0°C, preferably from -80°C to -20°C.

For polycondensates obtainable from a monomer composition having a molar ratio of hydroxyl groups to carboxyl groups in the range of from 1.03 to 1.17 (*i.e.* hydroxyl terminated polycondensates):
- acid value (expressed in mg KOH/g polymer) from 0.1 to 150, preferably from 0.1 to 20, even more preferably from 0.1 to 1.
- hydroxyl value (expressed in mg KOH/g polymer) from 1 to 150, preferably from 1 to 50, even more preferably from 15 to 25.

For polycondensates obtainable from a monomer composition having a molar ratio of hydroxyl groups to carboxyl groups in the range of from 0.83 to 0.97 *(i.e.* carboxylic acid terminated polycondensate):
- acid value (expressed in mg KOH/g polymer) from 1 to 150, preferably from 1 to 80, even more preferably from 5 to 40.
- hydroxyl value (expressed in mg KOH/g polymer) from 0.1 to 150, preferably from 0.1 to 50, even more preferably from 0.1 to 15.

The above ranges apply for polycondensates which have no optional component (d"). Acid values and hydroxyl values may change if optional component (d") is used. The extent of change depends on the type of optional component (d"), relative amount thereof and possibly other factors, so that no precise ranges can be given.

### 5.4 Plasticizer

The composition of the present invention optionally contains one or more plasticizers. The use of an oil plasticizer is preferred. Said oil plasticizer may be selected from any natural or synthetic, organic or mineral oil. The plasticizer may also be selected from the group of softeners and plasticizers employed in the polymer industry.

In a preferred embodiment the oil plasticizer is colourless, and its viscosity is lower than that of the polycondensate (without plasticizer). It is also preferred that the polycondensate is fully miscible within the plasticizer or in the mixture of the plasticizer and a solvent.

If present, the amount of the plasticizer in the formulation is preferably from 0.01 to 1.5 parts by weight, preferably 0.1 to 1 parts by weight, based on 1 part by weight of the polycondensate before curing.

The plasticizer is preferably added to the composition after polycondensation but before addition of the cross-linking agent.

In another preferred embodiment, and in combination with any of the above or below embodiments, the plasticizer is bio-based.

The plasticizer can for instance be one or more oils selected from the following list, but it is not limited thereto: sorbitan mono- or di-esters of fatty acids such as sorbitan ester of oleic acid, oleate esters, soybean oil, citrate ester, PEG (Mw 100-1000) and PEG derivatives such as PEG ether (such as dimethyl PEG) or-PEG esters such as PEG distearate, fatty acids such as myristic acid, palmitic acid, stearic acid, lauric acid, oleic acid, isostearic acid, neodecanoic acid, trimethylhexanoic acid and neoheptanoic acid; the esters of these fatty acids such as isopropyl myristate; fatty alcohols such as myristyl alcohol, cetyl alcohol, oleyl alcohol and lauryl alcohol; aliphatic pyrrolidones such as *N*-lauryl-2-pyrrolidone; terpenes such as 1-menthol, d-limonene and α-terpineol; alkanes such as heptane, octane, nonane and decane.. Additionally, fatty acid esters of monovalent alcohols such as cetyl octanoate, hexyl laurate, isopropyl myristate, isopropyl palmitate, butyl stearate, myristyl lactate, and the like; dibasic acid esters such as dioctyl adipate, diethyl sebacate, dioctyl sebacate, dioctyl succinate, and the like; fatty acid esters of polyvalent alcohols and the like such as propylene glycol dicaprate, glycerol trioctanoate, glycerol tri(octanoate/decanoate), medium chain fatty acid triglyceride, and the like; and in particular, isopropyl myristate, isopropyl palmitate, diethyl sebacate, middle chain fatty acid triglyceride, and the like are preferably used. Further examples of the oil additive include glycols such as ethylene glycol, diethylene glycol, propylene glycol, dipropylene glycol, tripropylene glycol, triethylene glycol, poly(propylene glycol) and the like; fats and oils such as olive oil, castor oil and the like; lanolin; hydrocarbons such as squalane and liquid paraffin; various surfactants; ethoxylated stearyl alcohol; glycerol monoesters such as oleic acid monoglyceride, caprylic acid monoglyceride and lauryl acid monoglyceride; dialkyl ester of polyalkylene glycol such as poly(propylene glycol); glycerol diester such as glycerol diacetate and the like, glycerol triester such as glycerol triacetate and the like, or a mixture thereof; fatty acid alkyl ester such as triethyl citrate and the like; long chain alcohol; higher fatty acid such as oleic acid and caprylic acid; alkyl ester of higher fatty acid such as isopropyl myristate; pyrrolidones such as N-methylpyrrolidone and N-dodecylpyrrolidone; sulfoxides such as decyl methyl sulfoxide; 1,3-butanediol and the like. All of the above oil additives can be used alone or in a mixture of two or more kinds thereof.

In another preferred embodiment, and in combination with any of the above or below embodiments, the oil additive is an isosorbide ester (monoester or diester) or a mixture of two or more isosorbide esters, each of which being selected from isosorbide monoesters or isosorbide diesters. The isosorbide diester employed can be either symmetrical or asymmetrical. Preferably, isosorbide is esterified with one or two fatty acids, both being independently selected from C₆₋₁₈ saturated or unsaturated fatty acids, more preferably C₈₋₁₂ saturated or unsaturated fatty acids. A mixture of isosorbide diesters is commercially available under the trade mark POLYSORB ID 37 (Roquette Frères, France).

### 5.5 Tackifier

In one embodiment, the formulation of the invention is intended for use in the repair of eroded wind turbine blades. According to this embodiment, the formulation preferably contains a tackifier agent or tack enhancer agent or a combination of two or more of such agents (hereinafter jointly referred to as "tackifier"). If present, the tackifier is preferably present in an amount from 0.001 to 0.3 parts by weight, preferably 0.01 to 0.05 parts by weight, based on 1 part by weight of the polycondensate before cross-linking.

In another preferred embodiment in combination with any of the above or below embodiments, the tackifier agent is bio-based.

The tackifier can for instance be rosin or a rosin derivative, but it is not limited to this type of substances. The tackifier is preferentially selected from the group consisting of rosins and their derivates (abietic acid, abietic acid esters), terpenes and their derivatives (polyterpene resins, terpene-phenol resins), aliphatic, cycloaliphatic and aromatic resins (C5 aliphatic resins, C9 aromatic resins, and C5/C9 aliphatic/aromatic resins), hydrogenated hydrocarbon resins, and their mixtures.

Suitable rosin derivatives are for instance: esterified hydrogenated rosin such as: Foralyn 90, Foralyn 110, Foralyn 5020-F (EASTMAN); and ester of tall oil rosin such as: Sylvalite RE 105XL (Arizona Chemical - The Netherlands).

### 5.6 Ethylenically unsaturated additive

In a preferred embodiment in combination with any of the above or below embodiments, when working with polycondensate (A), the composition of the invention or the formulation contains an ethylenically unsaturated additive. If polycondensate (A) is formed in the composition *in situ,* then preferably the ethylenically unsaturated additive is not added until after the polycondensation has been completed, but before the beginning of the curing step. Such an additive can be used to adjust the viscosity of the formulation composition or to facilitate the coating step.

The term "ethylenically unsaturated additive" as used herein refers to low molecular weight compounds having an ethylenically unsaturated moiety that can be co-polymerised with the ethylenically unsaturated dicarboxylic acid units of the polycondensate (A) during the curing step of the composition. The term "low molecular weight", as used herein, denotes a molecular weight of less than 2,000 g/mol, preferably less than 500 g/mol, more preferably less than 300 g/mol. The most preferred ethylenically unsaturated additives belong to the class of mono-functional acrylic esters or methacrylic esters, where the alkyl segment is a saturated, unsaturated or aromatic hydrocarbon chain which is linear, branched or cyclic. In a preferred embodiment in combination with any of the above or below embodiments, the alkyl chain of the (meth)acrylic acid ester has from 3 to 18 carbon atoms, *i.e.* 3, 4, 5, 6, 7, 8, 9, 10, 11, 12, 13, 14, 15, 16, 17 or 18 carbon atoms, more preferably from 2 to 8 carbon atoms, *i.e.* 2, 3, 4, 5, 6, 7 or 8 carbon atoms. In another preferred embodiment in combination with any of the above or below embodiments, the ethylenically unsaturated additive is at least partially derived from renewable sources, in particular, selected from the group consisting of *n*-butyl acrylate, 2-ethylhexyl acrylate, or *n*-octyl acrylate.

In a preferred embodiment, and in combination with any of the above or below embodiments, the ethylenically unsaturated additive is present in an amount from 0.01 to 0.8 parts by weight, preferably 0.05 to 0.3 parts by weight, based on 1 part by weight of the polycondensate (A) before cross-linking.

If coating of the formulation is to be done at room temperature, ethylenically unsaturated additive is advantageously added to the composition for lowering the viscosity of the resulting formulation in order to make handling (coating) thereof more easy. Alternatively, a hot-melt processing can also be applied for coating the composition. In that later case, addition of an ethylenically unsaturated additive is not necessary, and the viscosity of the composition is conveniently adjusted by performing the lamination at a temperature ranging from 40°C to 120°C.

### 5.7 Filler

In a preferred embodiment in combination with any of the above or below embodiments, the formulation contains a filler or a combination of two or more of such agents (hereinafter jointly referred to as "filler"). If present, the filler is preferably present at a concentration from 0.1 wt% to 50 wt% more preferably 5 wt% to 30 wt%, relative to the weight of the overall formulation.

In a preferred embodiment in combination with any of the above or below embodiments, the composition or formulation comprises a filler, more preferably selected from the group consisting of a silicate, talcum, calcium carbonate, clay, carbon black, pigments and pigment pastes, or pulp chopped fibers (preferably selected from the group consisting of kenaf, hemp, flax, jute, sisal, cotton and linen).

The filler can be added at any time before the curing step. It is preferably added after polycondensation is completed but before the beginning of the curing step.

### 5.8 Stabilizer

In a preferred embodiment in combination with any of the above or below embodiments, the formulation contains a stabilizer or a combination of two or more of such agents (hereinafter jointly referred to as "stabilizer"). If present, the stabilizer is preferably present at a concentration from 0.01 wt% to 20 wt% more preferably 0.1 wt% to 5 wt%, relative to the weight of the overall formulation.

Preferred stabilizers are, for instance, compounds able to improve weathering of the formulation and more particularly its resistance towards UV, extreme temperatures, and temperature variations, salinity and/or hydrolysis.

The stabilizer can be added at any time before the curing step. It is preferably added after polycondensation is completed but before the beginning of the curing step.

### 5.9 Optional further components of the composition

Further components may optionally be present, provided these optional further components do not interfere with the beneficial effects of the invention. Additional optional components suitable for use in the formulation of the present invention include the for instance gums (such as gum arabic, guar gum, locust bean gum). It is advantageous to employ only optional further components, which do not participate in the curing reaction or, at least, which do not participate in the curing reaction to such an extent that the effects of the present invention are detrimentally affected to a significant extent.

Undesired reactions of this type between the optional further components and the chain extension agent can be prevented by adding the optional further component only after the polycondensate has been chain-extended.

A sensitizer may also optionally be contained to improve the radical generation efficiency of a radical initiator, and to increase the range of the photosensitive wavelengths when polycondensate (A) is used. Preferably, a sensitizer is used, which sensitizes the radical initiator by way of an electron transfer mechanism or energy transfer mechanism is preferred.

Examples of the sensitizer, which may be used in the present invention, include the following compounds which have an absorption wavelength in a wavelength region of 300 nm to 450 nm. Examples of the sensitizer include polynuclear aromatics (for example, phenanthrene, anthracene, pyrene, perylene, triphenylene, 9,10-dialkoxyanthracene), xanthenes (for example, fluorescein, eosine, erythrosine, Rhodamine B, rose bengal), thioxanthones (isopropylthioxanthone, diethylthioxanthone, chlorothioxanthone), cyanines (for example, thiacarbocyanine, oxacarbocyanine), merocyanines (for example, merocyanine, carbomerocyanine), phthalocyanines, thiazines (for example, thionine, ethylene blue, toluidine blue), acridines (for example, acridine orange, chloroflavin, acriflavine), anthraquinones (for example, anthraquinone), squaryliums (for example, squarylium), acridine orange, coumarins (for example, 7-diethylamino-4-methylcouinarin), ketocoumarin, phenothiazines, phenazines, styryl benzenes, azo compounds, diphenyl methane, triphenyl methane, distyryl benzenes, carbazoles, porphyrin, spiro compounds, quinacridone, indigo, styryl compounds, pyrylium compounds, pyrromethene compounds, pyrazolotriazole compounds, benzothiazole compounds, barbituric acid derivatives, thiobarbituric acid derivatives, aromatic ketone compounds such as acetophenone, benzophenone, thioxanthone, Michler's ketone, and heterocyclic compounds such as N-aryloxazilidinone or the like.

The sensitizer may be used alone, or may be used in combination of two or more kinds.

A solvent can also be present as a further optional component, as long as it does not interfere with the cross-linking reaction. Using a solvent can be helpful for adjusting the viscosity of the composition. Suitable solvent to be used herein are known by the person skilled in the art.The total content of the further optional components such as sensitizers in the composition is preferably from 0.001 to 0.5 parts by weight, more preferably from 0.005 to 0.15 parts by weight, based on 1 part by weight of the polycondensate (A) before cross-linking.

### 5.10 Composition A

Composition A (sometimes also referred to as polycondensate composition A) is the composition that is present before curing yields formulation type A. Hence, it is a composition comprising polycondensate A as well as any optional components such as those mentioned above. The curing initiator described below may or may not yet be present. Adding the initiator at an early stage can be convenient. On the other hand, adding the initiator at a late stage, for instance immediately before curing, can improve stability of the composition. By consequence, formulation type A is obtained by directly curing composition A (if the curing initiator is already present) or by curing composition A after addition of the curing initiator (if the curing initiator is not yet present).

In a preferred embodiment in combination with any of the above or below embodiments, the concentration of optional additives in composition A before curing is 0.01 wt% to 50 wt%, more preferably 0.1 wt% to 30 wt%, and even more preferably 0.5 wt% to 15 wt%, relative to the weight of the overall formulation.

### 5.11 Composition 8

Composition B is the composition that is present before curing yields formulation type B. Hence, it is a composition comprising polycondensate B as well as any optional components such as those mentioned above and also the cross-linking agent described below.

In a preferred embodiment in combination with any of the above or below embodiments, the concentration of optional additives in composition B (not including the cross-linking agent) before curing is 0.01 wt% to 50 wt%, more preferably 0.1 wt% to 30 wt%, and even more preferably 0.5 wt% to 15 wt%, relative to the weight of the overall formulation.

### 5.12 Manufacture of Composition A

In a preferred embodiment, and in combination with any of the above or below embodiments, the method for preparing the composition A comprises mixing the polycondensate (A) and the optional additive(s) either by:
- Mixing two or more components in bulk (without solvent). In that case it may be preferable to heat at a temperature between 40°C to 100°C in order to decrease the melt viscosity and ensure good homogenization of the mixture, or
- Mixing at room temperature is also possible (*e.g*. if a thermal initiator is to be used for the cross-linking). In this case, it may be advantageous to add an organic solvent and/or other optional component(s) such as the ethylenically unsaturated additive in order to adjust viscosity to a desired level.

It may furthermore be advantageous to mix the polycondensate (A) initially with a solvent to decrease the viscosity before adding further ingredients. It is also preferable that the photoinitiator is added just before coating and curing.

### 5.13 Manufacture of Composition B

In a preferred embodiment, in combination with any of the above or below embodiments, the method for preparing the composition (B) comprises mixing the polycondensate (B) and the optional additive(s) either by:
- Mixing the components of the reaction mixture in bulk (without solvent). In that case heating at a temperature between 40°C to 100°C can be advantageous in order to decrease the melt viscosity and ensure good homogenization of the mixture, or
- Mixing of the components at room temperature is also possible. In this case, it may be advantageous to add an organic solvent and/or optional component(s) in order to adjust viscosity to a desired level.

### 6 Formulations of the invention and manufacture of the same

### 6.1 Overview

The formulations of types A and B of the present invention are compositions comprising one of above polycondensates in a cross-linked form together with one or more optional additive(s) such as the optional components described in Sections 5.3 to 5.11 above. Said optional components may be present as long as these do not prevent the beneficial effects of the present invention from being accomplished.

The formulation characteristics can be fine-tuned by multiple means, such as:
- varying the concentration of component (c) in the polycondensate (A), and/or
- varying the ratio of polycondensate (B) to cross-linking agent, and/or
- varying the dissipative character of the formulation by tuning the ratio, structure and functionality of plasticizer within the composition, and/or
- varying the degree of curing of the formulation (for instance by tuning the dose of radiation in the case of UV curing or tuning the curing temperature and/or time in the case of a thermal curing event), and/or
- varying the amount, structure and/or functionality of the ethylenically unsaturated additives added to the polycondensate (A) prior curing the formulation.
- varying the polycondensate architecture (linear *vs*. branched) by using optional components (d)

### 6.2 Cross-linking reaction of polycondensate (A)

Polycondensate (A) can be cured using any curing method known from the state of the art.

The present invention thus further relates to a process for radically curing the composition A, for example wherein the curing is effected by adding an initiator to the composition. An initiator may not be required in some cases (*e.g*. where curing is effected by e-beam). Preferably, the curing is effected at a temperature in the range from -20°C to +200°C and the initiator, if required, can be a photo-initiator, a thermal initiator and/or a redox initiator.

In a preferred embodiment, in combination with any of the above or below embodiments, the composition A is cured by an electromagnetic irradiation initiated process.

In the electromagnetic irradiation curing method, it is preferred that the composition A does not contain any organic solvents.

In another preferred embodiment, in combination with any of the above or below embodiments, a photo-initiating system can be a photo-initiator as such, or a mixture of photo-initiators, and can be chosen from the large numbers of photo-initiating systems known by the person skilled in the art. Suitable photo-initiators that create free radicals upon irradiation with light of respective wavelength are a preferred group of catalysts. Preferably, the photo-initiator is selected from the group consisting of diacyl peroxides, dialkylperoxidicarbonates, tert-alkyl peroxyesters, di-tert-alkyl peroxides, teralkylhydroperoxides, ketone peroxides, and mixtures thereof. Examples of suitable photoinitiators include the compounds manufactured by Ciba, Switzerland under the trade names Darocur® and Irgacure®. Such initiator compounds are usually added to the composition in small amounts, for example, 0.05 wt% to 10 wt%, preferably 0.1 wt% to 3 wt%, and more preferably from 0.5 wt% to 2 wt%, relative to the polycondensate weight. The absorption characteristics of the photoinitiator are not particularly limited. It is possible to freely choose a photoinitiator or a mixture of photoinitiators having absorbance characteristics that match the intended type of curing irradiation. If the composition contains an optional component that has a strong absorbance in UV, a photoinitiator with different wavelength absorbance profile should be selected. This comment is valid for all optional components that can be used in connection with the present invention.

According to one embodiment, curing is initiated by electromagnetic irradiation. Said electromagnetic irradiation may be in any wavelength or range of wavelengths, for which a suitable photoinitiator or system of photoinitiator and sensitizer is available. This may include gamma-rays, X-rays, UV rays as well as visible light. Of course, the type and intensity of electromagnetic irradiation is suitably matched with the selected photoinitiator or photoinitiator/sensitizer combination.

In another preferred embodiment, in combination with any of the above or below embodiments, the composition is cured by a thermally-initiated process. The thermal initiator can be selected from azo compounds like for example azoisobutyronitril (AIBN), C-C labile compounds like for example benzopinacole, peroxides, and mixture thereof. In the thermal-curing method, the composition could contain both an organic solvent and an ethylenically unsaturated additive. Thermal initiators are typically used in an amount of from 0.05 wt% to 10 wt%, preferably 0.1 wt% to 3 wt%, and more preferably from 0.5 wt% to 2 wt%, relative to the polycondensate weight.

In another preferred embodiment, in combination with any of the above or below embodiments, the composition is cured by a redox-initiated process. The redox initiator can be selected from hydroperoxides, peroxycarbonates, peroxyesters, diacylperoxides, or dialkylperoxides. In the redox-curing method, the composition could contain both an organic solvent and an ethylenically unsaturated additive. Redox initiators are typically used in an amount of from 0.05 wt% to 10 wt%, preferably 0.1 wt% to 3 wt%, and more preferably from 0.5 wt% to 2 wt%relative to the polycondensate weight.

If a thermal initiator or redox initiator is used, the crosslinking reaction can be started by heating the reaction mixture. Crosslinking reaction temperature can be selected from 80°C to 300°C, preferably from 100°C to 250°C, even more preferably from 120°C to 180°C.

In another preferred embodiment, in combination with any of the above or below embodiments, the composition is cured via an electron-beam process. In this particular case the use of initiator is optional.

Crosslinking reaction time can be selected from 0.5 to 600 minutes, preferably from 1 to 20 minutes, even more preferably from 3 to 8 minutes. Postcuring is an optional further manufacturing step, which can in some instances be advantageous for adjusting the desired product characteristics. Typically postcuring is effected by keeping the cured material at 20°C to 70°C, more preferably 40°C to 70°C, for 1 day to 2 weeks, more preferably 1 to 3 days.

### 6.3 Cross-linking reaction of polycondensate (B)

### 6.3.1 Cross-linking agent

Crosslinking of the above polycondensate (B) is accomplished by reacting the polycondensate with one or more cross-linking agents. Polycondensate (B) can be cured using any curing method known from the state of the art.

In a preferred embodiment in combination with any of the above or below embodiments, the cross-linking agent has at least 2 functional groups selected from the group consisting of an isocyanate, an epoxide, an anhydride, maleimide, a carbodiimide and any combinations thereof. Among these groups of cross-linking agents, it is advantageous to use the isocyanate-based cross-linkers, the epoxide-based cross-linkers, the anhydride-based cross-linkers and/or the maleimide-based cross-linkers for the cross-linking of OH-terminated polycondensates. It is furthermore advantageous to use the epoxy-based cross-linkers and/or the carbodiimide-based cross-linkers for the cross-linking of carboxyl-terminated polycondensates.

In a preferred embodiment in combination with any of the above or below embodiments, the cross-linking agent has a structure R-(N=C=O)ₙ, wherein R is an aliphatic, alicyclic or aromatic residue, and n is an integer ≥ 2. In a preferred embodiment in combination with any of the above or below embodiments, R is an aliphatic, alicyclic or aromatic residue containing from 10 to 40 carbon atoms. In a preferred embodiment in combination with any of the above or below embodiments, n is an integer of 2, 3, 4, 5 or 6, more preferably of 2, 3 or 4, in particular 3. In another preferred embodiment in combination with any of the above or below embodiments, the cross-linking agent is selected from the group consisting of dimerized or trimerized isocyanates, more preferably dimerized or trimerized aliphatic isocyanates, and any combination thereof.

In another preferred embodiment in combination with any of the above or below embodiments, the crosslinking agent is selected from the group consisting of trimerized derivatives of MDI [4,4-methylene-di(phenyl isocyanate)], HDI [hexamethylene diisocyanate, 1,6-hexylene diisocyanate], IPDI [isophorone diisocyanate, 5-isocyanato-1-isocyanatomethyl-1,3,3-trimethylcyclohexane], and any combination thereof. In another preferred embodiment in combination with any of the above or below embodiments, the cross-linking agent is selected from the group consisting of Desmodur VL 50 (MDI-based polyisocyanates, Bayer AG), Basonat F200WD (aliphatic polyisocyanate, BASF AG), Desmodur^{®} grades N3600 and XP2410 (each from BAYER AG: aliphatic polyisocyanates, low-viscosity HDI trimers), the trimer of isophorone diisocyanate (Vestagon B 1530), modified compounds thereof such as uretonimine-modified compounds thereof, and any combination thereof.

In another preferred embodiment in combination with any of the above or below embodiments, the crosslinking agent is selected from the group consisting of dimerized isocyanates such as diphenylmethane 4,4'-diisocyanate, Toluene diisocyanate, hexamethylene diisocyanate, isophorone diisocyanate, 4,4-dicyclohexyl methane diisocyanate and/or mixture thereof. Such compounds are commercially available from Covestro^{®} (Leverkusen, Germany) under the trade name Desmodur^{®} PF.

In a preferred embodiment in combination with any of the above or below embodiments, the isocyanate cross-linking agent described above can be used in their protected version as "blocked isocyanate". "Blocked isocyanates" are class of compounds in which the isocyanate group are chemically capped with a protective group. "Blocked isocyanates" can be converted into their isocyanate equivalent upon exposure to heat. "Blocked isocyanates" capping groups are known to the skilled person in the art and can be, but are not limited to, diethyl malonate, 3,5-dimethylpyrazole, methylethylketoxime or caprolactam. Blocked isocyanate cross-linkers may also be used. Such compounds are commercially available from Covestro^{®} (Leverkusen, Germany) under the trade names Desmodur^{®} BL, Desmocap^{®} and Sumidur^{®} BL, as described in http://www.coatings.covestro.com/en/Technologies/Solventborne/Blocked-Polyisocyanates.

In a preferred embodiment in combination with any of the above or below embodiments, the cross-linking agent has at least 2 epoxy functional groups. In another preferred embodiment in combination with any of the above or below embodiments, the cross-linking agent is selected from the group consisting of a dimeric, oligomeric and polymeric epoxy materials containing at least 2 epoxy functional groups, and any combination thereof.

In another preferred embodiment in combination with any of the above or below embodiments, the cross-linking agent is selected from the group consisting of glycidyl esters. In another preferred embodiment in combination with any of the above or below embodiments, the crosslinking agent is the reaction product of epichlorohydrin and p-amino phenol. In another preferred embodiment in combination with any of the above or below embodiments, the crosslinking agent is the reaction product of bisphenol A and epichlorohydrin, more preferably selected from the group consisting of Ciba Geigy Araldite™ 6010, Dow Chemical DER™ 331, and Shell Chemical Epon™ 825, 828, 826, 830, 834, 836, 1001, 1004, 1007.

In another preferred embodiment in combination with any of the above or below embodiments, the cross-linking agent is the reaction product of phenol and formaldehyde (novolac resin) and epichlorohydrin, more preferably a novolac resin selected from the group consisting of DEN™ 431 and 438 from Dow Chemical, CY-281™ from Ciba Geigy (polyepoxidized phenol formaldehyde novolac prepolymer), ECN™ 1285, 1280 and 1299 from Ciba Geigy (polyepoxidized cresol formaldehyde novolac prepolymer).

In another preferred embodiment in combination with any of the above or below embodiments, the cross-linking agent is a polyglycidyl ether of polyhydric alcohol, more preferably wherein the polyhydric alcohol is butane-1,4-diol (available under the trade-name Araldite™ RD-2 from Ciba Geigy) or glycerine (available under the trade-name Epon™ 812 from Shell Chemical).

In another preferred embodiment in combination with any of the above or below embodiments, the cross-linking agent is a flexible epoxy resin, more preferably selected from polyglycol diepoxies (available under the trade-name DER™ 732 and 736, from Dow Chemical Company), and a diglycidyl ester of linoleic dimer acid (available under the trade-name Epon™ 871 and 872, from Shell Chemical Company).

In another preferred embodiment in combination with any of the above or below embodiments, the cross-linking agent is an epoxy resin having more than two functional groups, more preferably selected from the group consisting of triglycidyl isocyanurate (TGIC), N,N,N',N'-tetrakis(2-hydroxyethyl)adipamide (*e.g*. Primid XL 552), tetraglycidyl meta-xylenediamine (such as Erisys GA-240 from Emerald Performance Materials), a triglycidylether of p-aminophenol (*e.g*. Araldite™ 0500/0510 from Ciba-Geigy Corporation), N,N,N',N',-tetraglycidyl-a,a'-bis(4-aminophenyl)-p-diisopropyl-benzene, diglycidyl ether of bisphenol-9-fluorene, and N,N,N',N'-tetraglycidyl-4,4'-methylenebis-benzenamine (*e.g.* Araldite™ 720 from Ciba Corporation).

In another preferred embodiment in combination with any of the above or below embodiments, the cross-linking agent is an epoxidized triglyceride, more preferably an epoxidized triglyceride of a natural oil, in particular wherein the natural oil is selected from the group consisting of linseed oil, soybean oil, castor oil, palm kernel oil, sunflower oil, corn oil, cottonseed oil, perilla oil, rapeseed oil, olive oil, canola oil, palm oil, coconut oil, rice bran oil, safflower oil, sesame oil, tall oil, and any combination thereof. In another preferred embodiment in combination with any of the above or below embodiments the number of epoxy groups in the epoxidized fatty acid ester is 2, 3, 4, 5 or 6, more preferably 3, 4 or 5.

Triglycerides are the main component of natural oils and are composed of three fatty acid groups connected by a glycerol centre. Epoxidized triglycerides can be found as such in nature, for instance in Vernonia plants, or can be conveniently synthesized from more common unsaturated oils by using a standard epoxidation process.

Epoxidized triglycerides are also commercially available. For example, epoxidized linseed oil (ELO) is available from Cognis (Düsseldorf, Germany) under the trade name DEHYSOL B316 SPEZIAL, or Arkema (King of Prussia, Pennsylvania) under the trade name VIKOFLEX 7190. Epoxidized soybean oil (ESBO) is commercially available from Cognis (Düsseldorf, Germany) under the trade name DEHYSOL D82, or from Arkema (King of Prussia, Pennsylvania) under the trade name VIKOFLEX 7170.

In a preferred embodiment in combination with any of the above or below embodiments, the cross-linking agent has at least 2 anhydride functional groups. In another preferred embodiment in combination with any of the above or below embodiments, the cross-linking agent is selected from the group consisting of a dimeric, oligomeric and polymeric anhydride materials containing at least 2 anhydride functional groups, and any combination thereof. In another preferred embodiment in combination with any of the above or below embodiments, the cross-linking agent is selected from the group consisting of pyromellitic dianhydride (PMDA), 3,3',4,4'-oxydiphthalic dianhydride (ODPA), 3,3',4,4'-benzophenone tetracarboxylic dianhydride (BTDA), 3,3',4,4'-biphenyltetracarboxylic dianhydride, 1,2,3,4-cyclobutanetetracarboxylic dianhydride, 4,4'-diphthalic (hexafluoroisopropylidene) anhydride (6FDA), benzoquinonetetracarboxylic dianhydride, and ethylenetetracarboxylic dianhydride.

In another preferred embodiment in combination with any of the above or below embodiments, the cross-linking agent is a maleimide compound, more preferably N,N'-m-phenylene bismaleimide, bis(maleimido)ethane, 1,4-bis(maleimido)butane, or bis(maleimido)hexane.

In another preferred embodiment in combination with any of the above or below embodiments, the cross-linking agent is a carbodiimide crosslinker. Suitable carbodiimide crosslinkers are commercially available, for instance, from RheinChemie (Product name Stabaxol) and Picassian polymers (Product name Picassian XL-725). Suitable carbodiimide crosslinker are furthermore described in US 2013/0144006 A1 and especially in paragraph 89 thereof.

### 6.3.2 Cross-linking reaction

In a preferred embodiment the crosslinking agent is present at concentration of 0.1 parts by weight to 30 parts by weight more preferably 2 parts by weight to 25 parts by weight, even more preferably 5 parts by weight to 20 parts by weight, relative to 100 parts by weight of the polycondensate (B) prior to cross-linking. If a linear aliphatic NCO prepolymer is used, the amount should preferably be in the range 10-20 parts by weight relative to 100 parts by weight of the polycondensate (B) prior to cross-linking.

It is possible to carry out the cross-linking reaction by heat or using a catalyst or a combination of heat and catalyst.

In a preferred embodiment the crosslinking agent, polycondensate, plasticizer and optional component are mixed together for the crosslinking reaction. In other words, it is preferred to use composition B as a starting material.

In another preferred embodiment the crosslinking agent, polycondensate, plasticizer, optional component and an organic solvent are mixed together for the crosslinking reaction. The organic solvent employed can be aromatic (such as toluene) or non-aromatic (such as ethyl acetate). The concentration of the organic solvent employed is comprised from 0.1 to 100 parts by weight, preferably from 5 to 50 parts by weight, even more preferably from 10 to 30 parts by weight, (with regard to 100 parts by weight of the polycondensate).

The crosslinking reaction can be started by heating the reaction mixture. Crosslinking reaction temperature can be selected from 25°C to 200°C, preferably from 100°C to 180°C, even more preferably from 120°C to 150°C.

Crosslinking reaction time can be selected from 0.5 to 600 minutes, preferably from 1 to 20 minutes, even more preferably from 3 to 8 minutes.

The reaction mixture may be formed by mixing the above-mentioned components. The type of mixing as well as the relative order of addition of the individual components are not particularly limited and are known to the skilled person in the art.

In a preferred embodiment the crosslinking agent, polycondensate, additive(s) and optional component(s) are mixed together at the same time to yield the reaction mixture for the crosslinking reaction.

It is possible to carry out the cross-linking reaction by heat or using a catalyst or a combination of heat and catalyst. Suitable catalysts are known from the skilled person in the art. For instance, in the case of the isocyanate-hydroxyl group reaction the interested reader can refer to Werner Blank and coworkers in Progress in Organic Coatings 35 (1999) 19-29. A combination of two or more catalysts can also be used.

### 6.4 Cross-linked polycondensate formulations A and B

In a preferred embodiment in combination with any of the above or below embodiments, the gel content value of the cross-linked polycondensate formulation of type A and/or of type B in the composition is from 40 % to 99%, most preferably from 60 % to 90%. The formulation of type A and/or of type B is not adhesive (unless a tackifier is added to yield formulation type C described below). This is due to its high degree of cross-linking. This absence of adhesive properties means that the formulation shows a peel force of less than 1 N / 25 mm and more preferably less than 0.5 N / 25 mm. Such peel forces are measured on stainless steel at 180° angle at 23°C ±1°C and 50% ±5% RH, on a sample of 25 mm width and a length at least 6 cm, which is obtained by pressing with a 2 kg roller twice, followed by equilibration during a dwell time of 30 min (at 23°C ±1°C 50% ±5% RH), wherein the speed of peeling is 300 mm/min. Any further experimental details are in accordance with ASTM D3330 / D3330M-02. As noted above, higher degrees of adhesiveness are found only in the formulations of the present invention which are intended for repair use. In these formulations, the desired degree of adhesiveness is accomplished by adding a tackifier as described above.

Preferably, the formulation of type A and/or B is further characterized by one or more of the following properties:
- a tensile elongation at break measured according to ASTM D638 - 14 comprise preferably between 10 and 2000 %, more preferably between 50 and 1500 % and even more preferably between 100 and 1000 %.
- a breaking strength (*i.e.* stress value at rupture) measured according to ASTM D638 - 14 comprise preferably between 0.01 and 6 N/mm², more preferably between 0.05 and 3 N/mm² and even more preferably between 0.1 and 1.5 N/mm².

### 6.5 Formulation C

As described above, it is possible to combine the formulations A and/or B with a tackifier. This can be advantageous if it is desired to use such formulations for repairing wind turbine blades having suffered erosion.

In the context of the present application, such a formulation derived from formulation A or B but additionally containing a tackifier is identified as formulation C.

In principle, the above indications apply in a similar manner for formulation C as they apply for formulations A and B. There is however a significant difference: due to the additional presence of tackifier, the formulation C is adhesive whereas formulations A and B are not adhesive.

In one preferred embodiment, the outer surface of formulation C (*i.e.* the surface exposed to the elements) is covered by a coating, a film or an outer skin (as described below) so that the outer surface is non-sticky. This is performed to avoid that air-borne particles and/or insects adhere to such Formulation C.

### 6.6 Films and coatings of the invention and manufacture of the same

The formulations of the present invention may be used to form films or sheets.

The method for manufacturing the films and coatings of the invention is not particularly limited. In a preferred embodiment of practicing the invention, composition A or composition B is casted onto a release liner, followed by curing. In one aspect, a reaction mixture is formed by mixing the polycondensate with the optional additives), a solvent (optional) or a mixture of solvents (optional), the ethylenically unsaturated additive (optional) and the photoinitiator as well as any further optional components. If a tackifier is used and if the tackifier is a solid, a solution of tackifier in a compatible solvent is preferably used. Once the reaction mixture is homogeneous, the solution is casted on a liner and cured by means of the cross-linking reaction described herein. After curing, the "free" side of the formulation, that is, the side not in contact with the release liner, may be laminated onto a semi-finished product, such as the leading edge of the blade of a wind turbine, to thereby yield the final product of interest. This is done using an adhesive layer in between the film or sheet of the present invention and the surface of the wind turbine blade. Alternatively, the "free" side of the formulation may be simply laminated onto a further liner surface for storage purposes.

The manufacture of films and sheets of the invention can be done by extrusion of the compositions (A) or (B), optionally followed by stretching. Said stretching can be monodirectional or bidirectional. Typical draw ratios are from 1 to 10 in the longitudinal direction and from 1 to 10 in the transverse direction. Extrusion can be effected using any kind of mono- or twin-screw extruder with heating temperatures in the range of from 100°C to 300°C and more particularly from 120°C to 250°C.

Films or sheets of the present invention can also be obtained by coating the compositions (A) or (B) of the present invention onto a target surface and curing the resulting coating *in situ.* This approach may for instance be advantageous in repair uses. If formulations are coated the curing step is performed directly on the substrate. Depending on the constrains, the person skilled in the art can choose from the different curing methods offered by polycondensate A and B the most suitable for *"in situ"* curing.

When manufacturing the films and coatings of the present invention, processes leading to films and coatings with low surface roughness should be employed in order to avoid disturbance of aerodynamic performance of the air foil. In a preferred embodiment, the film surface roughness is inferior to 1mm, more preferably inferior to 0.8mm and even more preferably inferior to 0.5mm.

In a preferred embodiment, the thickness of the film or sheet at its rim is minimum such as is does not impair with the aerodynamic properties of the airfoil on which the system is installed. The thickness of the film or sheet at its rim is preferably less than 200µm, more preferably less than 150µm and even more preferably less than 100µm.

In view of aerodynamic properties, it is furthermore preferred that the thickness increases gradually and steadily from the rim towards the centre, *i.e.* the foremost position at the edge of the wind turbine blade. At the centre, the thickness of the film or sheet is preferably from 8 to 0.1 mm, more preferably from 7 to 1 mm and even more preferably from 6 to 3 mm.

In a preferred embodiment, the thickness of the film or sheet is not uniform. In this embodiment, the maximum thickness is found where impact probability is the highest.

### 6.5 Uses and applications

The films or sheets of the present invention are suitable for preventing or reducing leading edge erosion in wind turbines. A preferred use of the films and sheets of the present invention is therefore in the prevention or reduction of such leading edge erosion. For this purpose, the leading edge of a wind turbine is provided with a film or sheet of the present invention. This can be done by adhering the film or sheet onto the leading edge by means of a suitable adhesive layer. Alternatively, the film or sheet can be formed *in situ* on the leading edge as described above. In this case, no adhesive may be necessary.

The adhesive layer to be used in combination of the invention described herein is not specifically restricted providing that it can withstand the conditions encountered on a wind turbine blade. These conditions include, but are not limited to extreme temperatures and temperature variations, high UV exposure, high humidity variations and exposure to the elements like rain, hail, snow and the like.

The adhesive layer material is not particularly limited and examples of suitable adhesives include those based on acrylic polymers; rubber-based adhesives such as styrene/diene/styrene block copolymers (e.g., styrene/isoprene/styrene block copolymers and styrene/butadiene/styrene block copolymers), polyisoprene, polyisobutylene, and polybutadiene; silicone type adhesives such as silicone rubbers, dimethylsiloxane-based polymers, and diphenylsiloxane-based polymers; vinyl ether type adhesives such as poly(vinyl methyl ether), poly(vinyl ethyl ether), and poly(vinyl isobutyl ether); vinyl ester type adhesives such as vinyl acetate/ethylene copolymers; and polyester type adhesives produced from a carboxylic acid ingredient such as dimethyl terephthalate, dimethyl isophthalate, or dimethyl phthalate and a polyhydric alcohol ingredient such as ethylene glycol. The adhesive layer may be either a cross-linked adhesive layer or an uncross-linked adhesive layer. Preferably, the adhesive layer is a pressure-sensitive adhesive layer. From the standpoint of adhesion to the airfoil hydrophobic adhesives are preferred.

As noted above, there is no particular limitation regarding the adhesive systems that can be used for making the adhesive layer of the present invention. Adhesive systems may in particular be pressure-sensitive adhesive systems. Typical representatives of such systems, which are all useful for the present invention, are acrylics, rubbers, silicones, polyurethanes, polyesters, polyethers and EVA systems. For instance, any of the pressure-sensitive adhesive systems described in *"*Adhesion Science and Engineering" edited by M. Chaudhury and A.V. Pocius, Elsevier B.V., 2002; *"*Pressure-sensitive Adhesives and Applications" by I. Benedek, 2nd Ed., Marcel Dekker Inc., 2004; as well as "Technology of Pressure-Sensitive Adhesives and Products" edited by I. Benedek and M.M. Feldstein, CRC Press, 2009; can be used in the present invention.

In a preferred embodiment, in combination with any of the above or below embodiments, a switchable adhesive system is employed to secure the device on its substrate. Using switchable adhesive system is beneficial for the present invention since it allow easy dismounting of the device in case it needs to be replaced. Switchable adhesive system are known in the art and examples of suitable technology are disclosed in WO 2001/005584 or US 2013/0196143.

In a preferred embodiment, in combination with any of the above or below embodiments, the adhesive is selected is such a way that its viscoelastic behaviour contributes in a synergetic effect to the overall device impact and erosion resistance.

In a preferred embodiment, in combination with any of the above or below embodiments, a low weight material is employed for the adhesive layer so that the system overall weight is minimized in order to reduce the load applied to the airfoil.

In a preferred embodiment, the thickness of the adhesive layer is 10 - 200 µm, and more preferably 15 - 50 µm.

A release liner may also be disposed on the pressure-sensitive adhesive layer before the adhesive layer is used, to improve ease of handling such as, for example, protect the adhesive layer and provide additional support (*e.g*. stiffness). Examples of the material that can be used as a release liner include materials which are known in this field. Suitable release liner materials may, for instance, include bases having a release layer of a plastic film or paper which surface is treated with a release agent such as a silicone, long-chain alkyl, fluorine, or molybdenum sulfide release agent; low-adhesive bases comprising fluorine-containing polymers; and low adhesive bases comprising non-polar polymers including olefinic resins such as polyethylenes and polypropylenes to improve release property from an adhesive layer. Specific examples thereof include films of plastics such as polyesters including poly(ethylene terephthalate), poly(vinyl chloride), poly(vinylidene chloride), various acrylic and methacrylic polymers, polystyrene, polycarbonates, polyimides, cellulose acetate (acetate), regenerated cellulose (cellophane), and celluloid and laminated films composed of wood-free paper, glassine paper, or the like and a polyolefin. It is preferred to use a polyester film. A preferred option is a fluorinated siliconized material.

The thickness of the release liner is generally 10 - 200 µm, preferably 25 -100 µm.

It is preferred to use a release liner having maximum peel force of less than 0.5 N/25mm when measured at a 180° peeling angle.

When providing a leading edge of a wind turbine with the film or sheet of the present invention, this is typically done such that the film or sheet covers the following area of the blade: the leading edge, the suction side and the pressure side. More particularly the films or sheets of the present invention are meant to cover the leading edge of the tip section and the mid section of blade turbine. Usage of the present invention on the max cord section and/or the root section is of limited benefit since these areas are known to the skill person in the art to be less prone to erosion. It is preferred that the present invention cover the leading edge on a width of at least 5 cm and more preferable at least 15 cm and preferably up 1 m, more preferably up to 80 cm of width.

In this case the invention disclosed herein can be folded in such manner that it can adopt the complex geometry such as that of a leading edge of a wind turbine blade in such manner that no air blister are created at the interface of said erosion protection sheet and the blade laminate surface.

When providing a leading edge of a wind turbine with the layered structure of the present invention, this is typically done such that the layered structure covers the following area of the blade: the leading edge, the suction side and the pressure side. More particularly the film or sheet of the present invention are meant to cover the leading edge of the tip section and the mid section of blade turbine. Usage of the present invention on the max cord section and/or the root section is of limited benefit since these areas are known to the person skilled in the art to be less prone to erosion.

The length and width dimensions of the film or sheet of the present invention are not particularly limited. They reflect the size and the geometry of the wind turbine rotor blade to be protected. Having regard to typical sizes of such blades, the length of the film or sheet may range from 0.1 m to 100 m, typically from 0.5 m to 30 m and more preferably from 1 m to 10 m.

Similarly, the width depends on the thickness of the blade airfoil type to be protected. Typical widths range from 5 cm to 1 m, preferably from 10 cm to 50 cm.

It is of course possible to provide the blade with a protective film or sheet of the invention in two, three, four or more parts. This can be easier to apply. By consequence, the size and preferably the length of the film or sheet of the invention is reduced accordingly, e.g. lengths of the individual parts can be 1/2, 1/3 or 1/4 of the lengths indicated above.

In a preferred embodiment, the thickness of the layer used to construct the device and hence, the thickness of the overall system is not uniform. In this embodiment, the maximum thickness is found where impact probability is the highest. Differences in thickness may be present for each of the layers and especially the damping layer and/or the outer skin.

In a preferred embodiment, the thickness of the device at its rim is minimum such as is does not impair with the aerodynamic properties of the airfoil on which the system is installed.

In view of aerodynamic properties, it is furthermore preferred that the thickness increases gradually and steadily from the rim towards the centre, *i.e.* the foremost position at the edge of the wind turbine blade. At the centre, the thickness of the overall system is preferably from 0.05 to 10 mm, more preferably from 0.1 to 4 mm. At its edges, the thickness of the overall system is preferably from 0.01 to 1 mm, more preferably less than 0.5 mm, even more preferably less than 0.25 mm and most preferably less than 0.1 mm. According to another aspect, the thickness at the rim is preferably less than 200µm, more preferably less than 120µm and even more preferably less than 80µm.

Optionally, it is possible to smoothen the transition at the rim of the layered structure by means of paste and/or putty, for instance relying on a silicone-based material.

The leading edge of the wind turbine may be provided with a sensory system to monitor its erosion status. Said sensor may or may not be included and/or embedded within the layered structure of the present invention.

In a preferred embodiment, in combination with any of the above or below embodiments, the system is coupled with a sensing system for condition monitoring. Said sensor can be used to follow properties of both the eorsion protection system of the overall airfoil. Properties measured by said sensor include but are not limited to fatigue, stiffness, crack and/or any combination thereof.

Example of suitable sensor to be used in combination of the present invention include but are not limited to acoustic emission sensor, strain sensor, optical fibers based system and/or any combination thereof. Suitable sensory systems are described, for instance, in EP 2 676 113 or US 2013/0089463.

In a preferred embodiment, in combination with any of the above or below embodiments, the system is coupled with an anti-icing system. Said anti-icing system may or may not be included within the layered structure of the present invention.

The films and sheets of the present invention can also be incorporated into more complex layered structures for the protection of wind turbine rotor blades against leading edge erosion.

One possible approach is to provide a layered structure with two or more of the films or sheets of the present invention. These may be bonded to each other via adhesive layers as described herein. It is an advantageous aspect of this embodiment that the films or sheets may individually be selected such that they differ from each other in terms of characteristics (*e.g*. density, strength, etc.). This possibility may be used to select combinations of films or sheets that complement each other in a synergetic manner.

Another possible approach is to provide the composition of the present invention with an outer skin. This approach may of course be combined with the other approaches above and below.

The function of the outer skin is to protect the damping layer from external elements including but not limited to salt, chemical attack, blood and residues from insects, faeces from birds, ice, water attack, hail and snow, rain erosion, salinity, wear from sand and other small particles UV irradiation, and/or any combination thereof.

The materials employed for the outer skin are not particularly limited providing that the constituents of the outer skin are able to provide the above protection effect.

Application of the outer skin can be accomplished by conventional coating or laminating techniques. A preferred technique is application by aerosol deposition. This technique is suitable for ceramic materials and also for blend of inorganic and organic materials (such as polymer/ceramic beads). Other preferred technique for application of the outer skin include, but are not limited to spraying, dip coating, lamination and roll-to-roll processes, vapor deposition, plasma deposition as well as chemical and electrochemical techniques.

Materials suitable for use in the present invention as outer skin materials are characterized by one or more of the following characteristics:
- density of from 0.5 to 10 g/cm³, preferably from 0.6 to 9 g/cm³ and more preferably from 0.8 to 8.0 g/cm³;
- Young's modulus of from 0.5 to 100 GPa preferably from 1.0 to 50 GPa and more preferably from 1.5 to 30 GPa;
- water vapour transmission rate at 23°C and 85% relative humidity of less than 1000 g/m² d (wherein d stands for "day"), more preferably less than 100 g/m² d, and even more preferably 10 g/m² d.
- a root mean square surface roughness of less than 1 mm, preferably less than 0.5 mm and even more preferably less than 0.25 mm

It is preferred that the material exhibits at least a Young's modulus and root mean square surface roughness characteristics in accordance with the above indications.

The materials that can be employed for the outer skin are not particularly limited. Also preferred are materials that are able to resist impact as defined in standard ASTM G76 - 13 *"*Standard Test Method for Conducting Erosion Tests by Solid Particle Impingement Using Gas Jets", ASTM G73-10 "Standard Practice for Liquid Impingement Erosion Testing", and/or ASTM G76-13 "Standard Test Method for Conducting Erosion Tests by Solid Particle Impingement Using Gas Jets, wherein impact resistance in these tests is to be determined for a material having the same layer thickness as it is envisaged for the outer skin of the layered structure of the invention". Preferably, a material is selected that complies with the requirements of more than one of these tests

In a preferred embodiment, the outer skin is a ceramic material or a composite comprising ceramic and polymer, which is advantageously applied by aerosol deposition process. Examples of suitable ceramic material include but are not limited to Al₂O₃, TiO₂, BaTiO₃ and/or mixture thereof. Aerosol deposition process is well known in the art and is, for instance, described in Hanft et al. J. Ceramic. Sci. Tech. (2015), 06,147-182.

In a preferred embodiment, the outer skin is a graphene based material, which is advantageously applied by chemical vapour deposition process or spraying for instance.

In a preferred embodiment, the outer skin is a resin component selected from epoxy resin, polyester resin, polyurethane resin, which is optionally reinforced by glass fiber and/or carbon fiber.

In a preferred embodiment, in combination with any of the above or below embodiments, a low weight material is employed for the outer skin so that the system overall weight is minimized in order to reduce the load apply to the airfoil.

In a preferred embodiment, in combination with any of the above or below embodiments, the material employed for the outer skin is selected in such a way that its behaviour contributes in a synergetic effect to the overall device impact resistance.

In a preferred embodiment, in combination with any of the above or below embodiment, the outer skin is covered with a coating providing anti-icing properties. Examples of suitable anti-icing coatings are disclosed in US 2015/0376483.

In a preferred embodiment, in combination with any of the above or below embodiments, the material employed for the outer skin is selected or treated in such a way that it exhibits hydrophobic properties.

In a preferred embodiment, in combination with any of the above or below embodiments, the system is covered with a coating providing self cleaning properties.

Further layers may also be provided. For instance, it is conceivable to join the outer skin to the formulation by means of an adhesive layer. There is no limitation to the adhesive materials that can be used for this purpose as long as the material exhibits the required adhesiveness and weathering resistance. The adhesive materials described above are preferred.

### 7. Preferred embodiments

It is generally preferred to rely on preferred features and it is more preferred to rely on more preferred features and/or on combinations of multiple (*e.g.* two, three, four or more) preferred features as described herein. The greater the number of preferred features that are combined, the greater the degree of preference. This applies to features characterizing the components of the different compositions described herein, but it also applies to features characterizing manufacturing processes, uses and any combination thereof.

For instance, it is particularly preferred to rely on a composition A comprising a polycondensate made from a fully hydrogenated fatty acid dimer described above as component (a'), a dimer of a fatty alcohol, 1,4-butanediol or a combination of a dimer of fatty alcohol and 1,4-butanediol described above as component (b'), as well as an unsaturated dicarboxylic acid component (c) selected from the group consisting of fumaric acid, maleic acid, itaconic acid, citraconic acid mesaconic acid and aconitic acid, and/or their respective C₁₋₄ dialkyl esters. It is even more preferred to use UV curing to obtain formulation A from this particularly preferred composition.

For instance, it is particularly preferred to rely on a composition B comprising a polycondensate made from a fully hydrogenated fatty acid dimer described above as component (a'), a dimer of a fatty alcohol, 1,4-butanediol or a combination of a dimer of fatty alcohol and 1,4-butanediol described above as component (b'). It is even more preferred to cure this composition with an isocyanate crosslinker to obtain formulation B from this particularly preferred composition.

Further optional components may be used in any amount together with the more preferred and particularly preferred embodiments, as desired, provided the further optional components do not compromise the effects of the invention to a significant extent.

## Claims

1. Polycondensate composition selected from the polycondensate composition embodiments (A) and (B):
(A) Polycondensate composition comprising a polycondensate (A) obtainable by polycondensation of a monomer mixture comprising:
a. at least one dicarboxylic acid;
b. at least one diol;
c. at least one ethylenically unsaturated diacid; and
d. optionally one or more further components;
wherein the molar ratio of dicarboxylic acid (a) to ethylenically unsaturated diacid (c) is from 99 to 0.33, preferably from 19 to 1.0, and even more preferably from 9 to 1.5;
(B) Polycondensate composition comprising a cross-linking agent and a polycondensate (B) obtainable by polycondensation of a monomer mixture comprising:
a". at least one dicarboxylic acid;
b". at least one diol; and
c". optionally one or more further components;
wherein the cross-linking agent is present in an amount of 1 parts by weight to 30 parts by weight, preferably 5 parts by weight to 20 parts by weight or greater than 20 parts by weight to 30 parts by weight, relative to 100 parts by weight of the polycondensate (B).

2. Polycondensate composition according to claim 1, embodiment (A), wherein the average molecular weight of polycondensate (A) is 35,000 to 95,000 g/mol or polycondensate according to claim 1, embodiment (B), wherein the average molecular weight of polycondensate (B) is 20,000 to 85,000 g/mol.

3. Polycondensate composition according to embodiment (A) of claim 1 or 2, wherein the molar ratio of diols (b) to dicarboxylic acid (a) and (c) is either in the range of from 0.83 to 0.97 or in the range of from 1.03 to 1.17.

4. Polycondensate composition according to embodiment (A) of claim 1, 2 or 3, wherein the polycondensate has an α transition temperature below 0°C, preferably from -80°C to -20°C, even more preferably from -60°C to -45°C.

5. Polycondensate composition according to embodiment (B) of claim 1 or 2, wherein the polycondensate has an α transition temperature below 0°C, preferably from -80°C to -20°C.

6. Method for producing the polycondensate composition of any one of claims 1 to 5, the method comprising the step of polycondensation of a monomer mixture as specified in claim 1.

7. Method according to claim 6, wherein the obtained polycondensate is a polycondensate of embodiment (A) of claim 1, the method comprising the step of mixing the obtained polycondensate with an initiator.

8. Method according to claim 7, wherein the obtained polycondensate is a polycondensate of embodiment (B) of claim 1, comprising the step of mixing the polycondensate with a cross-linking agent.

9. Formulation selected from formulation embodiments (A), (B) and (C):
(A) Formulation obtainable by curing the polycondensate composition (A) according to embodiment (A) of any one of claims 1 to 5, wherein the formulation has a peel strength of less than 1 N / 25 mm on stainless steel; and
(B) Formulation obtainable by curing the composition (B) according to embodiment (B) of any one of claims 1, 6 or 7, wherein the formulation has a peel strength of less than 1 N / 25 mm on stainless steel; and
(C) Formulation obtainable by combining a formulation according to embodiment (A) or (B) of this claim with a tackifier and wherein peel strength of the formulation before combination with the tackifier is less than 1 N / 25 mm on stainless steel.

10. Method for producing the formulation according to embodiment (A) of claim 9, comprising the step of curing the composition (A) of any one of claims 1 to 4; or method for producing the formulation according to embodiment (B) of claim 9, comprising the step of curing the composition (B) of any one of claims 1 or 5.

11. Film or sheet comprising or consisting of the formulation (A) or (B) according to claim 9.

12. Film or sheet according to claim 11, which has a maximum thickness of from 0.05 to 10 mm, more preferably from 0.1 to 4 mm, wherein the thickness may be uniform or may decrease towards the outer rim.

13. Film or sheet according to claim 11 or 12, wherein the film or sheet has a length of from 0.5 m to 30 m, more preferably from 1 m to 10 m and a width of from 5 cm to 1 m, preferably from 10 cm to 80 cm.

14. Layer structure comprising at least one film or sheet according to any one of claims 11 to 13 as well as at least one adhesive layer.

15. Use of the film or sheet according to claim 13 for preventing or reducing leading edge erosion in wind turbines.

16. Use of the formulation (C) according to claim 11 for repairing blades of wind turbines having defects resulting from leading edge erosion.
